# EUROPÄISCHE PATENTSCHRIFT

(11) **EP 1 368 935 B1**
(45) Veröffentlichungstag und Bekanntmachung des Hinweises auf die Patenterteilung: **28.02.2007**
(21) Anmeldenummer: 02727207.9
(22) Anmeldetag: 11.03.2002
(51) Int. Cl.: H04L 12/413, H04J 3/06, G05B 19/418, H04L 12/417

(54) **SYNCHRONES, GETAKTETES KOMMUNIKATIONSSYSTEM MIT DEZENTRALEN EIN-/AUSGABE-BAUGRUPPEN UND VERFAHREN ZUR EINBINDUNG DEZENTRALER EIN-/AUSGABE-BAUGRUPPEN IN EIN SOLCHES SYSTEM**
SYNCHRONOUS, CLOCKED COMMUNICATION SYSTEM WITH LOCAL INPUT/OUTPUT COMPONENTS AND METHOD FOR INTEGRATING LOCAL INPUT/OUTPUT COMPONENTS INTO SUCH A SYSTEM
SYSTEME DE COMMUNICATION SYNCHRONE ET CADENCE, COMPORTANT DES ENSEMBLES D'ENTREE/DE SORTIE DECENTRALISES, ET PROCEDE POUR INTEGRER DES ENSEMBLES D'ENTREE/DE SORTIE DECENTRALISES DANS UN TEL SYSTEME

(30) Priorität: 16.03.2001 DE 10113261
(43) Veröffentlichungstag der Anmeldung: 10.12.2003
(73) Patentinhaber: SIEMENS AKTIENGESELLSCHAFT, 80333 München (DE)
(72) Erfinder: FRANKE, Michael, 91056 Erlangen (DE); HELLMICH,Steffen c/o Siemens Numerical Control Ltd, Nanjing, 211100 (CN); KIESEL, Martin, 91099 Poxdorf (DE); SEEGER, Guido, 91083 Baiersdorf (DE); WEI BACH, Bernhard, 09669 Frankenberg (DE)
(86) Internationale Anmeldenummer: PCT/DE2002/000858
(87) Internationale Veröffentlichungsnummer: WO 2002/076033

(56) Entgegenhaltungen:
- EP-A- 0 903 655
- WO-A-02/075509
- DE-A- 10 110 675
- US-A- 5 566 180
- US-A- 5 887 029
- US-A- 5 974 056
- LONN H: "INITIAL SYNCHRONIZATION OF TDMA COMMUNICATION IN DISTRIBUTED REAL-TIME SYSTEMS" PROCEEDINGS OF THE 19TH INTERNATIONAL CONFERENCE ON DISTRIBUTED COMPUTING SYSTEMS. ICDCS '99. AUSTIN, TX, MAY 31 - JUNE 4, 1999, INTERNATIONAL CONFERENCE ON DISTRIBUTED COMPUTING SYSTEMS, LOS ALAMITOS, CA: IEEE COMPUTER SOC, US, 31. Mai 1999 (1999-05-31), Seiten 370-379, XP000883615 ISBN: 0-7803-5706-X
- KIEL ET AL: 'EINCHIP-CONTROLLER FUER DAS SERCOS-INTERFACE. \INTEGRIERTE ECHTZEIT-KOMMUNIKATION FUER DIE MSR-TECHNIK' ELEKTRONIK; WEKA FACHZEITSCR.-VERLAG, MUNCHEN, DE Bd. 41, Nr. 6, 17 M{rz 1992, Seiten 50,55 - 59, XP000287921

## Beschreibung

Die Erfindung bezieht sich auf ein synchrones, getaktetes Kommunikationssystem mit dezentralen Ein-/Ausgabe-Baugruppen und ein Verfahren zur Einbindung von dezentralen Ein-/Ausgabe-Baugruppen in ein solches System.

Unter einem synchronen, getakteten Kommunikationssystem mit Äquidistanz-Eigenschaften versteht man ein System aus wenigstens zwei Teilnehmern, die über ein Datennetz zum Zweck des gegenseitigen Austausches von Daten bzw. der gegenseitigen Übertragung von Daten miteinander verbunden sind. Dabei erfolgt der Datenaustausch zyklisch in äquidistanten Kommunikationszyklen, die durch den vom System verwendeten Kommunikationstakt vorgegeben werden. Teilnehmer sind beispielsweise zentrale Automatisierungsgeräte, Programmier-, Projektierungs- oder Bediengeräte, Peripheriegeräte wie z.B. Ein-/Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Unter Kontrolleinheiten werden im folgenden Regler- oder Steuerungseinheiten jeglicher Art verstanden. Als Datennetze werden beispielsweise Bussysteme wie z.B. Feldbus, Profibus, Ethernet, Industrial Ethernet, FireWire oder auch PC-interne Bussysteme (PCI), etc. verwendet.

In verteilten Automatisierungssystemen, beispielsweise im Bereich Antriebstechnik, werden u.a. taktsynchrone Datennetze bzw. Bussysteme eingesetzt. Dabei werden einige der angeschlossenen Teilnehmer als Master-Geräte, z.B. Kontrolleinheiten wie numerische oder speicherprogrammierbare Steuerungen oder Projektiergeräte, und andere Teilnehmer als Slave-Geräte, wie z.B. Antriebe oder Peripheriegeräte, verwendet. Automatisierungskomponenten beider Kategorien können taktsynchron arbeiten, d.h., diese Teilnehmer können sich auf einen verwendeten Kommunikationstakt des Datennetzes synchronisieren. Dies bedeutet, dass der Kommunikationstakt von den Teilnehmern über das verwendete Datennetz übernommen und synchron zu diesem Kommunikationstakt bestimmte Vorgänge gesteuert werden. Gemäß IEC 61491, EN61491 SERCOS interface - Technische Kurzbeschreibung (http://www.sercos.de/deutsch/doku_freier_bereich.htm) wird dies gegenwärtig in verteilten Automatisierungssystemen angewendet und durchgeführt. Dagegen können dezentrale Ein-/Ausgabe-Baugruppen wie z.B. I/O-Module, die als Schnittstellen beispielsweise zwischen dem Datennetz und zu steuernden Geräten bzw. einem zu steuernden Prozess bidirektional für den Austausch von Signalen und/oder Daten zwischen den zu steuernden Geräten bzw. Prozessen und anderen Teilnehmern des Kommunikationssystems, wie z.B. Kontrolleinheiten mittels des Datennetzes sorgen, derzeit nicht taktsynchron arbeiten, d.h. sie können sich nicht auf einen Kommunikationstakt des Kommunikationssystems synchronisieren. Dadurch ist einerseits die Schaltung von Ein- und Ausgängen der dezentralen Ein-/Ausgabe-Baugruppen zu einem festen, vorher bestimmten Zeitpunkt nicht möglich und andererseits ist es ebenfalls nicht möglich, das Schalten von Ausgängen mit genügend großer zeitlichen Genauigkeit festzulegen. Dadurch hängt die Zeitspanne zwischen Signalerfassung und Datenausgabe von den Totzeiten innerhalb des Kommunikationssystems, insbesondere innerhalb der dezentralen Ein-/Ausgabe-Baugruppen, ab. Im Folgenden wird unter dem Begriff zu steuerndes Gerät auch ein zu steuernder Prozess, insbesondere Automatisierungsprozess und/oder Teilprozess eines Automatisierungsprozess verstanden.

Aus dem Aufsatz "Einchip-Controller für das SERCOS-Interface" von Dipl.- Ing. Edwin Kiel und Oliver Schierenberg, veröffentlicht in der Zeitschrift Elektronik 6/1992, Seiten 50, 55 bis 58 ist das SERCOS-Interface als ein synchrones, getaktetes Kommunikationssystem mit Äquidistanzeigenschaften bekannt, das im Bereich industrieller Anlagen eingesetzt wird.

Aus der US-A-5 887 029 ist ein weiteres Kommunikationssystem für den Einsatz in industriellen Anlagen bekannt, in welchem Ein-/Ausgabebaugruppen Geräteschnittstellen zu einem Datennetz bilden.

Aufgabe der Erfindung ist es, ein synchrones, getaktetes Kommunikationssystem mit Äquidistanzeigenschaften und wenigstens einer dezentralen Ein-/Ausgabe-Baugruppe und ein Verfahren zur Einbindung einer oder mehrerer dezentralen Ein-/Ausgabe-Baugruppen in ein synchrones, getaktetes Kommunikationssystem anzugeben, bei dem die Eigenschaften eines solchen Kommunikationsnetzes auf die dezentralen Ein-/Ausgabe-Baugruppen ausgeweitet und von diesen genutzt werden können.

Diese Aufgabe wird durch ein Verfahren mit den in Anspruch 1 genannten Merkmalen und durch ein synchrones, getaktetes Kommunikationssystem mit den Merkmalen des Anspruchs 22 gelöst.

Die Erfindung ist dadurch gekennzeichnet, dass wenigstens ein Teilnehmer des Kommunikationssystems einen Zähler aufweist und vom Teilnehmer mit dem Zähler mittels des Zählers die Anzahl der Kommunikationszyklen vom Hochfahren des Systems an von Null oder einem beliebigen Offset beginnend im laufenden Betrieb permanent mitgezählt wird, sowie dass jeweils mit Beginn eines neuen Kommunikationszyklus der Zähler um eins inkrementiert wird. Dabei charakterisiert der jeweils aktuelle Stand des Zählers den jeweils aktuellen Kommunikationszyklus. Ein beliebiger Kommunikationszyklus kann dabei aus einer Zahl, insbesondere einem Zählerstand, abgeleitet und/oder berechnet werden. Der Kommunikationszyklus selbst wird durch eine digitalisierte Zahl oder eine absolute Zeiteinheit, die sich aus der Dauer eines Kommunikationszyklus ableitet, dargestellt. Dadurch kann ein Zeitstempel aus einem Kommunikationszyklus, der als digitalisierte Zahl oder in einer absoluten Zeiteinheit, die sich aus der Dauer eines Kommunikationszyklus ableitet, dargestellt wird, und/oder einem Zeitwert innerhalb eines Kommunikationszyklus generiert werden. Ein Teilnehmer hat während des Betriebs des Systems so permanent die Möglichkeit, den aktuellen Kommunikationszyklus zu ermitteln, wodurch die Voraussetzung geschaffen ist, dass alle Teilnehmer diese Information erhalten können, wenn der entsprechende Teilnehmer diese Information über das verwendete Datennetz verteilt. Dadurch ist die Voraussetzung geschaffen, dass Ereignisse innerhalb des Kommunikationssystems so gesteuert werden können, dass diese isochron durchgeführt werden können. Dies gilt selbstverständlich für alle Teilnehmer des Kommunikationssystems. Ein weiterer Vorteil ist dadurch gegeben, dass aus einem Zählerstand der jeweils zugehörige Kommunikationszyklus abgeleitet werden kann. Damit ist es möglich, einen Kommunikationszyklus sowohl als digitalisierte Zahl, beispielsweise unmittelbare Verwendung des Zählerstands, oder aber auch als absolute Zeiteinheit, die sich aus der Dauer eines Kommunikationszyklus berechnen lässt, darzustellen, wodurch eine für die jeweilige Situation optimale Form der Darstellung wählbar ist.

Der Zeitstempel besteht aus zwei Teilen, wobei der eine Teil den Kommunikationszyklus des Kommunikationssystems bestimmt, in welchem Signale eines zu steuernden Geräts am Eingang einer dezentralen Ein-/Ausgabe-Baugruppe registriert und erfasst werden oder Signale am Ausgang einer dezentralen Ein-/Ausgabe-Baugruppe geschaltet und an das zu steuernde Gerät ausgegeben werden sollen und der andere Teil den Zeitpunkt relativ zum Anfang oder zum Ende des jeweils relevanten Kommunikationszyklus des Kommunikationssystems bestimmt. Vorteil dieser Ausgestaltung ist eine weitere Verfeinerung der Skalierung für die Genauigkeit beim Erfassen und Registrieren von Signalen eines zu steuernden Geräts bzw. bei der Ausgabe von Signalen an das zu steuernde Gerät. Dadurch ist es nicht nur möglich, Signale im Raster einer Anzahl von Kommunikationszyklen bzw. daraus abgeleiteten absoluten Zeiteinheit zu bestimmen, bzw. einzuordnen, sondern es ist auch möglich, den Zeitpunkt innerhalb des jeweils relevanten Kommunikationszyklus genauestens zu bestimmen und die Ereignissteuerung entsprechend zu optimieren.

Eine weitere außerordentlich vorteilhafte Ausgestaltung der Erfindung ist dadurch gekennzeichnet, dass der jeweils aktuelle Zählerstand und/oder aktuelle Kommunikationszyklus und/oder aktuelle Zeitstempel vom Teilnehmer mit dem Zähler an wenigstens einen weiteren Teilnehmer des Kommunikationssystems mittels des Datennetzes verteilt wird. Eine ebenso vorteilhafte Ausgestaltung der Erfindung ist dadurch gekennzeichnet, dass der jeweils aktuelle Zählerstand vom Teilnehmer mit dem Zähler an wenigstens einen weiteren Teilnehmer des Kommunikationssystems mittels Datennetzes verteilt und von den jeweiligen Teilnehmern selbst der aktuelle Kommunikationszyklus und/oder aktuelle Zeitstempel aus dem übermittelten aktuellen Zählerstand übermittelt wird. Dadurch ist es möglich, bestimmten, beispielsweise dezentralen Ein-/Ausgabe-Baugrupppen, oder auch allen Teilnehmern eines Kommunikationssystems mit den beschriebenen Eigenschaften die entsprechenden Informationen mitzuteilen, auf deren Basis isochroner Datenaustausch bzw. die Steuerung von Ereignissen, bzw. Ereignisabfolgen innerhalb des Kommunikationssystems zwischen den Teilnehmern erheblich verbessert, bzw. erst ermöglicht werden kann.

Eine überaus vorteilhafte Ausgestaltung der Erfindung ist dadurch gekennzeichnet, dass Signale eines zu steuernden Geräts bei deren Registrierung und Erfassung am Eingang einer dezentralen Ein-/Ausgabe-Baugruppe von der Ein-/Ausgabe-Baugruppe mit dem zu diesem Zeitpunkt aktuellen Zeitstempel und dem Erfassungs-Schaltereignis versehen in ein für das Datennetz kompatibles Datenformat umgewandelt, mit dem Zeitstempel versehen in ein für das Datennetz kompatibles Datenformat umgewandelt, mit dem Zeitstempel und dem Schaltereignis über das Datennetz an die Kontrolleinheit weitergeleitet, dort ausgewertet und verarbeitet werden. Dadurch kann der Erfassungszeitpunkt von Signalen eines zu steuernden Geräts mit außerordentlicher Präzision bestimmt und gespeichert werden und steht damit zur Berechnung von abhängigen Ereignissen jederzeit zur Verfügung.

Eine weitere vorteilhafte Ausgestaltung der Erfindung ist dadurch gekennzeichnet, dass Daten, die für das zu steuernde Gerät bestimmt sind, vor der Übertragung an die dezentrale Ein-/Ausgabe-Baugruppe von der Kontrolleinheit mit einem Zeitstempel, bezogen auf den Zeitpunkt der geplanten Signalausgabe und einem Ausgabe-Schaltereignis versehen und mit diesem Zeitstempel und dem Schaltereignis über das Datennetz an die dezentrale Ein-/Ausgabe-Baugruppe übertragen werden, und dass Daten, die mit einem solchen Zeitstempel, der sich auf die geplante Signalausgabe bezieht, und einem Ausgabeschaltereignis versehen und für das zu steuernde Gerät bestimmt sind, von der dezentralen Ein-/Ausgabe-Baugruppe in für das zu steuernde Gerät interpretierbare Signale umgewandelt und zu dem Zeitpunkt, der durch den übertragenen Zeitstempel vorgegeben ist, am Ausgang der dezentralen Ein-/Ausgabe-Baugruppe gemäß des Schaltereignisses geschaltet und an das zu steuernde Gerät ausgegeben werden. Von besonderem Vorteil ist diese Ausgestaltung dadurch, dass abhängig vom Zeitpunkt der Registrierung eines Eintrittsereignisses am Eingang einer dezentralen Ein-/Ausgabe-Baugruppe das Schalten eines Ausgabeereignisses am Ausgang der dezentralen Ein-/Ausgabe-Baugruppe exakt geplant und mit einer außerordentlichen zeitlichen Präzision durchgeführt werden kann, was im Bereich Antriebstechnik in verteilten Automatisierungssystemen, beispielsweise bei holzverarbeitenden Maschinen oder für das Schalten von Nocken, etc. außerordentlich vorteilhaft ist. Der zeitliche Abstand zwischen Eingangsereignis und Ausgabeereignis ist also für jede beliebige Situation im geschilderten Anwendungsbereich individuell mit jeweils derselben hohen zeitlichen Genauigkeit einstellbar und erreichbar, wodurch die Abhängigkeit von Totzeiten von betroffenen Teilnehmern des Kommunikationssystems sehr stark reduziert wird.

Eine besonders vorteilhafte Ausgestaltung der Erfindung ist dadurch gekennzeichnet, dass Signale eines zu steuernden Geräts, die am Eingang einer dezentralen Ein-/Ausgabe-Baugruppe zum Gerät anliegen, bezogen auf den Kommunikationstakt des Kommunikationssystems von der dezentralen Ein-/Ausgabe-Baugruppe synchron erfasst, in ein für das Datennetz kompatibles Datenformat umgewandelt und synchron über das Datennetz zur Verarbeitung an eine Kontrolleinheit weitergeleitet werden. Damit kann sichergestellt werden, dass beim Eintritt eines Ereignisses beim zu steuernden Gerät, beispielsweise Istwerterfassung, die entstehenden Signale bzw. Daten von der dezentralen Ein-/Ausgabe-Baugruppe synchron zum Takt des Kommunikationssystems erfasst, in ein kompatibles Datenformat umgewandelt und im Takt des Kommunikationssystems über das Datennetz an die Kontrolleinheit zur dortigen Verarbeitung weitergeleitet werden.

Eine weitere vorteilhafte Ausgestaltung der Erfindung ist dadurch gekennzeichnet, dass Daten, die von der Kontrolleinheit über das Datennetz synchron an die dezentrale Ein-/Ausgabe-Baugruppe übertragen in der Ein-/Ausgabe-Baugruppe in für das zu steuernde Gerät interpretierbare Signale umgewandelt und bezogen auf den Kommunikationstakt des Kommunikationssystems synchron am Ausgang der dezentralen Ein-/Ausgabe-Baugruppe geschaltet und zum Gerät weitergeleitet werden. So können Daten, beispielsweise Sollwerte, die auf Basis von vorher empfangenen Istwerten eines zu steuernden Geräts von der Kontrolleinheit entsprechend berechnet wurden im Takt des Kommunikationssystems über das Datennetz an die dezentrale Ein-/Ausgabe-Baugruppe gesendet, von dieser in für das zu steuernde Gerät interpretierbare Signale, beispielsweise Lagesollwerte umgewandelt und synchron zum Takt des Kommunikationssystems am Ausgang der dezentralen Ein-/Ausgabe-Baugruppe geschaltet und an das zu steuernde Gerät übermittelt werden, wodurch die Vorhersagbarkeit und die zeitliche Genauigkeit des Schaltvorgangs selbst sowie der Signalermittlung herausragend verbessert wird.

Eine weitere besonders vorteilhafte Ausgestaltung der Erfindung ist dadurch gekennzeichnet, dass der Zeitpunkt für die Registrierung und Erfassung von Signalen eines zu steuernden Geräts am Eingang der dezentralen Ein-/Ausgabe-Baugruppe bezogen auf den Kommunikationstakt des Kommunikationssystems oder eines daraus abgeleiteten Takts einstellbar ist. Eine ebenso vorteilhafte Ausgestaltung der Erfindung ist dadurch gekennzeichnet, dass der Zeitpunkt für die Schaltung und Weiterleitung von Signalen am Ausgang der dezentralen Ein-/Ausgabe-Baugruppe an das zu steuernde Gerät, bezogen auf den Kommunikationstakt des Kommunikationssystems oder eines daraus abgeleiteten Takts einstellbar ist. Vorteil dieser. Ausgestaltung ist, dass die Erfassung und Registrierung eines Ereignisses am zu steuernden Gerät, beispielsweise eine Istwerterfassung, nicht nur im Takt des Kommunikationssystems durchgeführt werden kann, sondern dass auch der Zeitpunkt innerhalb eines Kommunikationstakts festgelegt werden kann, zu dem die Registrierung bzw. Erfassung erfolgen soll, beispielsweise unmittelbar vor Ende des aktuellen Kommunikationstakts oder zu einem anderen gewünschten Zeitpunkt innerhalb eines Kommunikationstakts. Analoges gilt für die Schaltung und Weiterleitung von Signalen, beispielsweise von Sollwerten am Ausgang der dezentralen Ein-/Ausgabe-Baugruppe an das zu steuernde Gerät, bei denen ebenfalls der Zeitpunkt für die Ausgabe innerhalb eines Kommunikationstakts, beispielsweise unmittelbar nach Beginn eines Kommunikationstakts, festgelegt werden kann. Die Erfassung von Eingangs- und Schaltung von Ausgangsereignissen mittels dezentraler Ein-/Ausgabe-Baugruppe wird dadurch einerseits plan- und vorhersagbar, weil beide Ereignisse in einen deterministischen Zusammenhang gestellt werden und gleichzeitig wird die zeitliche Genauigkeit bei der Erfassung von Signalen und beim Schalten von Ausgängen einer dezentralen Ein-/Ausgabe-Baugruppe zusätzlich erhöht. Außerdem kann dadurch insbesondere erreicht werden, dass eine Erfassung in jedem Kommunikationszyklus wenigstens einmal und immer exakt zum gleichen Zeitpunkt relativ zum Anfang bzw. Ende des jeweiligen Kommunikationszyklus durchgeführt wird.

Eine weitere vorteilhafte Ausgestaltung der Erfindung ist dadurch gekennzeichnet, dass die Registrierung und Erfassung von Signalen am Eingang der dezentralen Ein-/Ausgabe-Baugruppe von wenigstens zwei zu steuernden Geräten, die jeweils mit einer unterschiedlichen dezentralen Ein-/Ausgabe-Baugruppe verbunden sind, so synchronisiert wird, dass die Registrierung und Erfassung, bezogen auf den Kommunikationstakt des Kommunikationssystems, bei den jeweiligen Ein-/Ausgabe-Baugruppen zum selben Zeitpunkt erfolgt. Eine ebenso vorteilhafte Ausgestaltung der Erfindung ist dadurch gekennzeichnet, dass die Ausgabe von Signalen am Ausgang der dezentralen Ein-/Ausgabe-Baugruppe an wenigstens zwei zu steuernde Geräte, die jeweils mit einer unterschiedlichen dezentralen Ein-/Ausgabe-Baugruppe verbunden sind, so synchronisiert wird, dass die Ausgabe, bezogen auf den Kommunikationstakt des Kommunikationssystems bei den jeweiligen dezentralen Ein-/Ausgabe-Baugruppen zum selben Zeitpunkt erfolgt. Vorteil dieser Ausgestaltung ist, dass man die Registrierung und Erfassung von Signalen eines zu steuernden Geräts und die Ausgabe von Signalen an das zu steuernde Gerät, jeweils bezogen auf eine einzige Ein-/Ausgabe-Baugruppe, in einen deterministischen Zusammenhang bringen kann. Dies bedeutet, dass sowohl Registrierung und Erfassung von Signalen immer zum selben Zeitpunkt innerhalb eines Kommunikationstakts, als auch die Ausgabe von zugehörigen Antwortsignalen immer zum selben Zeitpunkt innerhalb eines folgenden, insbesondere im sich unmittelbar anschließenden Kommunikationstakts stattfinden kann, so dass der Abstand zwischen Registrierung und Erfassung und Ausgabe einen vorher bestimmbaren zeitlichen Abstand aufweist. Darüber hinaus kann dieses Verhalten auf wenigstens zwei oder mehr dezentrale Ein-/Ausgabe-Baugruppen ausgeweitet werden. Dies bedeutet, dass man wenigstens zwei oder mehr dezentrale Ein-/Ausgabe-Baugruppen und/oder auch Antriebe innerhalb eines Kommunikationstakts des Kommunikationssystems synchron, d.h. gleichzeitig zum selben Zeitpunkt innerhalb des betrachteten Kommunikationstakts zu einer Registrierung und Erfassung von Signalen bzw. zur Ausgabe von Signalen an unterschiedliche zu steuernde Geräte veranlassen kann. Dies ist insbesondere dann von Vorteil, wenn es sich bei den zu steuernden Geräten, beispielsweise Antriebe, um Geräte handelt, die im interpolatorischen Verbund zusammenarbeiten und deshalb dasselbe Verständnis von beispielsweise Lageinformationen bei Maschinen haben müssen, insbesondere, wenn dies die Steuerung von Achsen betrifft. Analoges gilt für die Ausgabe von Signalen, beispielsweise Sollwerte, an die zu steuernden Geräte.

Eine weitere, besonders vorteilhafte Ausgestaltung der Erfindung ist dadurch gekennzeichnet, dass die Registrierung und Erfassung von Signalen am Eingang wenigstens einer dezentralen Ein-/Ausgabe-Baugruppe und wenigstens einer anderen Automatisierungskomponente, insbesondere einem Antrieb so synchronisiert wird, dass die Registrierung und Erfassung, bezogen auf den Kommunikationstakt des Kommunikationssystems bei der dezentralen Ein-/Ausgabe-Baugruppe und der Automatisierungskomponente zum selben Zeitpunkt erfolgt.

Eine ebenso vorteilhafte Ausgestaltung der Erfindung ist dadurch gekennzeichnet, dass die Ausgabe von Signalen am Ausgang wenigstens einer dezentralen Ein-/Ausgabe-Baugruppe und wenigstens einer anderen Automatisierungskomponente, insbesondere einem Antrieb so synchronisiert wird, dass die Signalausgabe, bezogen auf den Kommunikationstakt des Kommunikationssystems bei der dezentralen Ein-/Ausgabe-Baugruppe und der Automatisierungskomponente zum selben Zeitpunkt erfolgt. Vorteil dieser Ausgestaltung ist, dass man eine oder mehrere dezentrale Ein-/Ausgabe-Baugruppen und/oder eine oder mehrere andere Automatisierungskomponenten, insbesondere Antriebe, innerhalb eines Kommunikationstakts des Kommunikationssystems synchron, d.h. gleichzeitig zum selben Zeitpunkt innerhalb des betrachteten Kommunikationstakts zu einer Registrierung und Erfassung von Signalen bzw. zur Ausgabe von Signalen an unterschiedliche zu steuernde Geräte veranlassen kann. Dies ist insbesondere dann von Vorteil, wenn es sich bei den zu steuernden Geräten um Geräte handelt, die im interpolatorischen Verbund zusammenarbeiten und deshalb dasselbe Verständnis von beispielsweise Lageinformationen bei Maschinen haben müssen, insbesondere, wenn dies die Steuerung von Achsen betrifft. Analoges gilt für die Ausgabe von Signalen, beispielsweise Sollwerte, an die zu steuernden Geräte.

Eine weitere vorteilhafte Ausgestaltung der Erfindung ist dadurch gekennzeichnet, dass innerhalb eines Kommunikationszyklus des Kommunikationssystems für jedes zu steuernde Gerät von den zugehörigen dezentralen Ein-/Ausgabe-Baugruppen wenigstens einmal Signale erfasst, in ein für das Datennetz kompatibles Datenformat umgewandelt und synchron, bezogen auf den Kommunikationstakt des Kommunikationssystems über das Datennetz zur Verarbeitung an die Kontrolleinheit weitergeleitet werden. Vorteil dieser Ausgestaltung ist, dass die Kontrolleinheit in jedem Kommunikationszyklus mindestens einmal die Möglichkeit besitzt, Istwerte mit bestimmten Sollwerten zu vergleichen und notfalls korrigierend einzugreifen.

Eine weitere überaus vorteilhafte Ausgestaltung der Erfindung ist dadurch gekennzeichnet, dass die jeweilige Erfassung von Signalen bei einem zu steuernden Gerät zu einem solchen Zeitpunkt innerhalb eines Kommunikationszyklus des Kommunikationssystems erfolgt, so dass von der dezentralen Ein-/Ausgabe-Baugruppe eine Umwandlung der Signale in ein für das Datennetz kompatibles Datenformat und eine Weiterleitung der Daten über das Datennetz zur Verarbeitung an die Kontrolleinheit im unmittelbar anschließenden Kommunikationszyklus und eine Umwandlung der Antwortdaten der Kontrolleinheit in der dezentralen Ein-/Ausgabe-Baugruppe in für das das zu steuernde Gerät interpretierbare Signale und deren Ausgabe an das zu steuernde Gerät im übernächsten Kommunikationszyklus erfolgt, so dass der Abstand zwischen Signalerfassung am zu steuernden Gerät und Ausgabe der Antwortsignale an das zu steuernde Gerät höchstens zwei Kommunikationszyklen des Kommunikationssystems beträgt. Vorteil dieser Ausgestaltung ist die Möglichkeit sehr schnell, möglichst zeitoptimal schalten zu können, d.h. die Reaktionsgeschwindigkeit zwischen Erfassung eines Ereignisses durch eine dezentrale Ein-/Ausgabe-Baugruppe, beispielsweise Istwerterfassung am zu steuernden Gerät, Verarbeitungslogik in der Kontrolleinheit, und Schalten der Ausgänge der entsprechenden dezentralen Ein-/Ausgabe-Baugruppe einschließlich der Übertragung der entsprechenden Antwortsignale an das zu steuernde Gerät, beispielsweise Sollwerte, zu optimieren.

Eine weitere vorteilhafte Ausgestaltung der Erfindung ist dadurch gekennzeichnet, dass von der dezentralen Ein-/Ausgabe-Baugruppe Kenndaten zur Verfügung gestellt werden, die von wenigstens einer Kontrolleinheit über das Datennetz abgerufen und ausgewertet werden können, wobei die Kenndaten die maximal mögliche Genauigkeit und den minimal möglichen Zeitpunkt bei der zeitlichen Erfassung von Signalen von einem zu steuernden Gerät erfassen. Eine weiterhin vorteilhafte Ausgestaltung der Erfindung ist dadurch gekennzeichnet, dass von der dezentralen Ein-Ausgabe-Baugruppe Kenndaten zur Verfügung gestellt werden, die von wenigstens einer Kontrolleinheit über das Datennetz abgerufen und ausgewertet werden können, wobei die Kenndaten die maximal mögliche Genauigkeit und den minimal möglichen Zeitpunkt bei der zeitlichen Ausgabe von Signalen an ein zu steuerndes Gerät umfassen. Vorteil dieser Ausgestaltungen ist dadurch gegeben, dass die dezentrale Ein-/Ausgabe-Baugruppe z.B. einer Kontrolleinheit mitteilen kann, mit welcher maximalen Genauigkeit eine Signalerfassung, beispielsweise Istwerterfassung, am zu steuernden Gerät von dieser dezentralen Ein-/Ausgabe-Baugruppe möglich ist, und zu welchem minimal möglichen Zeitpunkt dies möglich ist, damit diese Signale bzw. Daten beispielsweise im nächsten Kommunikationszyklus an die Kontrolleinheit noch weitergeleitet werden können. Dadurch ist die Kontrolleinheit in der Lage dieses Wissen der Kenndaten der dezentralen Ein-/Ausgabe-Baugruppen in die Regelung bzw. Steuerung des Automatisierungssystems mit einzubeziehen und entsprechend zu optimieren. Analoges gilt für die Ausgabe von Signalen, beispielsweise Sollwerte an die zu steuernde Geräte mittels der dezentralen Ein-/Ausgabe-Baugruppen. Darüber hinaus können diese Kenndaten beispielsweise als Gerätebeschreibungen selbstverständlich sowohl während des laufenden Betriebs online aus dem oder den entsprechenden Teilnehmern, insbesondere der oder den Automatisierungskomponenten, ausgelesen, als auch offline als Beschreibungsinformationen der jeweiligen Automatisierungskomponenten bereitgestellt werden, wodurch der Umfang der zur Verfügung gestellten Eigenschaften und dadurch der mögliche Einsatzbereich exakt dokumentiert ist.

Von besonderem Vorteil ist es darüber hinaus, dass die offenbarten Verfahren insbesondere bei und in Verpackungsmaschinen, Pressen, Kunststoffspritzmaschinen, Textilmaschinen, Druckmaschinen, Werkzeugmaschinen, Roboter, Handlingssystemen, Holzverarbeitungsmaschinen, Glasverarbeitungsmaschinen, Keramikverarbeitungsmaschinen sowie Hebezeugen eingesetzt bzw. verwendet werden können.

Im Folgenden wird die Erfindung anhand der in den Figuren dargestellten Ausführungsbeispielen näher beschrieben und erläutert.

Es zeigen:
- FIG 1: eine schematische Darstellung eines Ausführungsbeispiels für ein synchrones, getaktetes Kommunikationssystem,
- FIG 2: die prinzipielle Arbeitsweise in einem synchronen, getakteten Kommunikationssystem im Bereich verteilter Automatisierungssysteme und
- FIG 3: die prinzipielle Arbeitsweise in einem synchronen, getakteten Kommunikationssystem im Bereich verteilter Automatisierungssysteme unter Verwendung eines Stempels.

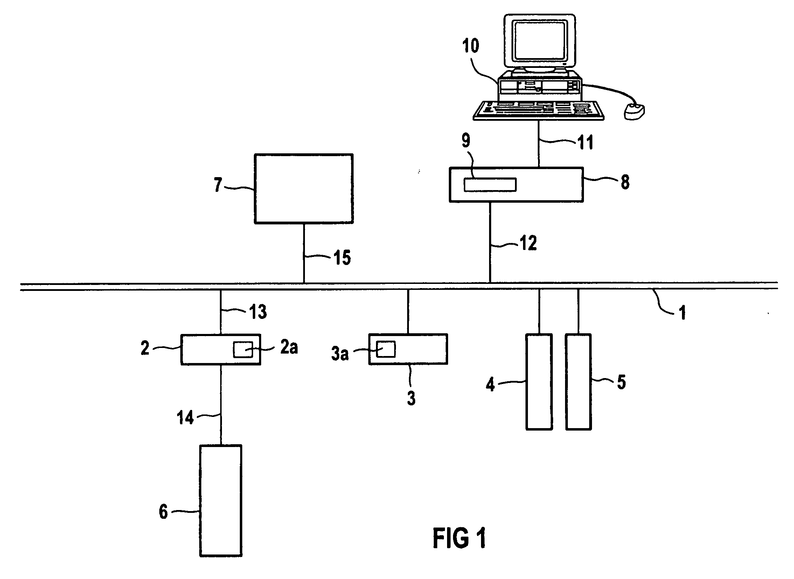

FIG 1 zeigt eine schematische Darstellung eines Ausführungsbeispiels für ein synchrones, getaktetes Kommunikationssystem. Bei dem dargestellten Kommunikationssystem handelt es sich dabei gleichzeitig um ein verteiltes Automatisierungssystem. Diese beiden Begriffe werden im folgenden synonym verwendet. Das gezeigte Ausführungsbeispiel besteht aus mehreren Teilnehmern, die gleichzeitig sowohl als Sender als auch als Empfänger ausgeprägt sein können, also sowohl Signale oder Daten senden als auch empfangen können. Alle Teilnehmer sind mittelbar oder unmittelbar an das Datennetz 1, beispielsweise ein Bussystem mit und/oder ohne Echtzeiteigenschaften, wie Taktsynchronisation und Äquidistanz, wie z.B. Ethernet, Industrial Ethernet, Feldbus, Profibus, FireWire oder auch PC-interne Bussysteme (PCI), etc., aber auch getaktete Datennetze, wie beispielsweise Isochrones Realtime Ethernet, über Datenleitungen, von denen aus Gründen der übersichtlichen Darstellung nur die Datenleitungen 11, 12, 13, 14 und 15 dargestellt wurden, angeschlossen. Die Datenleitungen sind dabei je nach Verwendungszweck so ausgeprägt, dass sie sowohl Daten als auch Signale oder andere elektrische Impulse übertragen bzw. leiten können. Insbesondere können auch Datenleitungen verschiedenen Typs in diesem verteilten Automatisierungssystem eingesetzt werden, die jeweils Daten in unterschiedlichem Datenformat übertragen können. So können beispielsweise über die Datenleitung 14 Daten in einem anderen Format gesendet werden als beispielsweise über die Datenleitung 13. Für eine entsprechende Konvertierung sorgt in diesem Fall beispielsweise die dezentrale Ein-/Ausgabe-Baugruppe 2. Selbstverständlich ist es aber auch möglich, dass die Datenleitungen 13 und 14 Daten im selben Format übertragen. In diesem Fall ist eine echte Datenkonvertierung durch die dezentrale Ein-/Ausgabe-Baugruppe 2 nicht notwendig, sondern es erfolgt eine Weiterleitung der Daten in unveränderter Form, was einem sogenannten Durchschalten der Daten entspricht. Davon unbetroffen ist die Möglichkeit, dass die dezentrale Ein-/Ausgabe-Baugruppe 2 die Daten in beliebiger Art und Weise bearbeitet und/oder verarbeitet, insbesondere den Daten einen Zeitstempel oder ähnliches hinzufügt, ohne das Datenformat selbst zu verändern und/oder es in ein anderes Format zu konvertieren, falls dies für einen ordnungsgemässes Funktionieren des Automatisierungssystem notwendig ist. Direkt an das Datennetz 1 angeschlossene Datenleitungen wie beispielsweise die Datenleitungen 12, 13 und 15 übertragen Daten prinzipiell im selben Datenformat wie das Datennetz 1 selbst. Das verwendete Datennetz 1 arbeitet getaktet und der Austausch von Daten über das Datennetz 1 erfolgt synchron im verwendeten Kommunikationstakt. Eine erstmalige Synchronisierung aller angeschlossenen Teilnehmer auf den verwendeten Takt erfolgt beispielsweise beim Hochfahren des Systems. Um den taktsynchronen Datenaustausch zu gewährleisten erfolgt eine permanente Resynchronisation der Teilnehmer während des laufenden Betriebs. Selbstverständlich ist es darüber hinaus auch möglich, dass Teilnehmer, die im laufenden Betrieb an das Datennetz 1 angeschlossen werden, sich auf den verwendeten Kommunikationstakt synchronisieren können. Besonders vorteilhaft ist die Möglichkeit den zu verwendenden Kommunikationstakt je nach Bedarf und/oder Anwendung zumindest beim Hochfahren des Systems einmal einstellen zu können. In diesem Ausführungsbeispiel sind als Teilnehmer zu steuernde Geräte, beispielsweise Antriebe 4, 5 und 6 sowie dezentrale Ein-/Ausgabe-Baugruppen 2 und 3, ein Projektierungsgerät 7, eine Kontrolleinheit 8, die beispielsweise mit einem Zähler 9 ausgestattet ist, und ein Bediengerät 10, das hier beispielsweise als Rechner mit Tastatur und Maus ausgeprägt ist, dargestellt. Selbstverständlich sind als Teilnehmer auch alle möglichen anderen Automatisierungskomponenten bzw. Geräte denkbar. Auch Anzahl und/oder Lokalisierung der betreffenden Teilnehmer sind hier nur beispielhaft angegeben. Die beispielhaft dargestellten dezentralen Ein-/Ausgabe-Baugruppen 2 und 3 weisen darüber hinaus mindestens Kenndaten über ihre maximal mögliche Genauigkeit und den minimal möglichen Zeitpunkt bei der zeitlichen Erfassung von Signalen von zu steuernden Geräten, und bei der zeitlichen Ausgabe von Signalen an zu steuernde Geräte, beispielsweise Antrieb 6, in abrufbarer Form, beispielsweise in internen Speichern 2a und 3a, auf.

Im offenbarten Ausführungsbeispiel kann ein Ereignis an einem zu steuernden Gerät, beispielsweise eine Istwerterfassung am beispielsweise analogen Antrieb 6 über einen, in diesen integrierten, der Übersichtlichkeit wegen nicht dargestellten Sensor und/oder Aktor vorgenommen werden, diese Istwerte mittels der Datenleitung 14 an die dezentrale Ein-/Ausgabe-Baugruppe 2 übergeben, dort taktsynchron erfasst und in ein entsprechendes für das Datennetz 1 kompatibles Datenformat umgewandelt werden. Die auf diese Weise konvertierten Daten werden dann synchron zum verwendeten Kommunikationstakt des Kommunikationssystems über die Datenleitung 13, das Datennetz 1, beispielsweise ein Ethernet-Bussystem, und die Datenleitung 12 an die Kontrolleinheit 8 weitergeleitet. Die Kontrolleinheit 8 ist beispielsweise als eine speicherprogrammierbare Steuerung (SPS) oder eine sonstige beliebige Steuerungs- bzw. Regelungseinheit ausgeprägt, die Daten, beispielsweise Istwerte, von allen an das Datennetz 1 angeschlossenen Teilnehmern empfangen und auswerten, und/oder Daten, beispielsweise Sollwerte an alle Teilnehmer senden kann. So verarbeitet die Kontrolleinheit 8 beispielsweise die von der dezentralen Ein-/Ausgabe-Baugruppe 2 taktsynchron gesendeten Istwerte des Antriebs 6, berechnet auf Basis dieser Istwerte entsprechende Sollwerte und sendet diese Sollwerte ebenfalls taktsynchron über die Datenleitung 12, das Datennetz 1 und die Datenleitung 13 an die dezentrale Ein-/Ausgabe-Baugruppe 2 zurück. Diese wandelt die empfangenen Sollwerte in für den Antrieb 6 interpretierbare Signale um und leitet sie über die Datenleitung 14 synchron zum verwendeten Kommunikationstakt an den Antrieb 6 weiter, der die empfangenen Sollwerte mittels eines, der Übersichtlichkeit wegen nicht dargestellten, integrierten Aktors, beispielsweise als Steuerbefehle interpretiert und umsetzt. Derselbe Mechanismus kann analog auf einen, der Übersichtlichkeit wegen nicht dargestellten Prozess übertragen werden, der beispielsweise an die dezentrale Ein-/Ausgabe-Baugruppe 3 angeschlossen ist.

Mittels eines Bediengeräts 10 über die Datenleitung 11 kann beispielsweise auch manuell auf die Kontrolleinheit 8 zugegriffen werden und dadurch auf die entsprechenden Regelungs- und Steuerungsmechanismen der Kontrolleinheit 8 Einfluss genommen werden. Von besonderem Vorteil ist es, dass beispielsweise ein an das Datennetz 1 angeschlossenes Projektierungsgerät 7, welches ebenfalls eine Kontrolleinheit darstellt, die Kenndaten der dezentralen Ein-/Ausgabe-Baugruppen 2 und 3 abfragen, auswerten und auf Basis dieser Daten ebenfalls Einfluss auf den Datenaustausch zwischen den, an das Datennetz 1 angeschlossen Automatisierungskomponenten ausüben oder diese Kenndaten für die Planung und Durchführung von Projektierungs- und/oder Steuerungsaufgaben berücksichtigen kann, wodurch das verteilte Automatisierungssystem sowohl zeit- als auch kostenoptimaler arbeiten kann. Das Projektierungsgerät 7 und die Kontrolleinheit 8 sind dabei als Master-Geräte ausgeprägt, da sie unmittelbaren Einfluss auf die Steuerung des Kommunikationssystems und der anderen angeschlossenen Teilnehmer ausüben können. Analog dazu werden die anderen Teilnehmer, beispielsweise die Antriebe 4, 5 und 6 sowie die dezentralen Ein-/Ausgabe-Baugruppen 2 und 3 als Slave-Geräte bezeichnet, da sie entsprechend von den Master-Geräten ausgesteuert werden. Wie aus dem Ausführungsbeispiel deutlich hervorgeht, ist es dabei ohne weiteres möglich und auch üblich, dass Automatisierungskomponenten wie beispielsweise die Antriebe 4 und 5 ohne eine zwischengeschaltete dezentrale Ein-/Ausgabe-Baugruppe direkt an das Datennetz 1 angeschlossen werden können. Auch die dargestellten Antriebe 4, 5 und 6 sind beispielhaft für beliebige Automatisierungskomponenten, insbesondere Feldgeräte, zu steuernde Geräte oder Maschinen, zu sehen.

Das dargestellte Ausführungsbeispiel weist darüber hinaus eine Kontrolleinheit 8 mit einem Zähler 9 auf. Der verwendete Zähler 9 ist beispielsweise vom Grundprinzip ein Modulo-Zähler, dessen Ausprägung abhängig von der gewünschten darzustellenden Größe, bzw. Zählerumfang beliebig, beispielsweise als 16-Bit-, 32-Bit-Zähler, etc, gewählt werden kann. Mit diesem Zähler 9, der als Standardausführung beispielsweise hardware- oder softwaremäßig realisiert sein kann, wird die Anzahl der Kommunikationszyklen vom Hochfahren des Systems an, von Null oder einem beliebigen Offset beginnend, während des laufenden Betriebs permanent mitgezählt. Dies bedeutet, dass jeweils mit Beginn eines neuen Kommunikationszyklus der Zählerstand des Zählers 9 um eine Einheit erhöht wird, wodurch der jeweils aktuelle Stand des Zählers 9 auch den jeweils aktuellen Kommunikationszyklus charakterisiert. Auslösendes Ereignis zum Erhöhen des Zählerstandes ist beispielsweise die Auswertung eines speziellen Datenpakets, z.B. ein sogenanntes global Control-Datenpaket, das unmittelbar zum Beginn des nächsten Kommunikationszyklusses gesendet wird. Ist der Zähler 9 beim Taktschläger selbst lokalisiert, beispielsweise bei der Kontrolleinheit 8, so wird der Zähler 9 unmittelbar zum oder beim Senden dieses speziellen Datenpakets erhöht und der aktuelle Zählerstand beispielsweise zusammen mit diesem Datenpaket an die übrigen Teilnehmer gesendet. Natürlich ist es aber ebenso denkbar, dass ein Zähler 9 bei einem oder mehreren anderen Teilnehmern lokalisiert ist. In diesem Fall wird der Zähler 9 von den entsprechenden Teilnehmern beim oder unmittelbar nach dem Empfang dieses Datenpakets erhöht. Da der jeweilige Zählerstand auf diese Weise eindeutig mit einem bestimmten Kommunikationszyklus korreliert ist, ist es auch möglich, dass ein beliebiger Kommunikationszyklus aus einer Zahl, insbesondere einem Zählerstand abgeleitet und/oder berechnet wird, wodurch ausgehend von einem aktuellen Zählerstand und damit dem aktuellen Kommunikationszyklus von einem in der Zukunft oder in der Vergangenheit erreichten Zählerstand der zugehörige Kommunikationszyklus eindeutig bestimmbar ist. Falls beispielsweise in einem bestimmten Kommunikationszyklus der Ausgang der dezentralen Ein-/Ausgabe-Baugruppe 2 geschaltet werden soll, wird dieses Ereignis bei Erreichen des korrespondierenden Zählerstandes entsprechend von der dezentralen Ein-/Ausgabe-Baugruppe 2 ausgelöst, was die Vorhersagbarkeit sowie die zeitliche Genauigkeit des Erfassens bzw. Auslösens von Ereignissen außerordentlich erhöht.

Die Kommunikationszyklen können dabei beispielsweise als digitalisierte Zahl oder als absolute Zeiteinheit, die sich aus der Dauer eines Kommunikationszyklus ableitet, beispielsweise als Vielfache von 1ms dargestellt werden. Diese Informationen können von einem Teilnehmer mit dem Zähler 9, beispielsweise der Kontrolleinheit 8, an einen oder mehrere oder auch alle Teilnehmer des Kommunikationssystems über das Datennetz 1 verteilt werden, damit für die entsprechenden Teilnehmer zu jeder Zeit eine eindeutige Zuordnung zu einem bestimmten, nämlich dem aktuellen Kommunikationszyklus möglich ist. Dadurch kann fehlerhaftes Verhalten einzelner Automatisierungskomponenten aufgrund zeitlicher Verschiebungseffekte, Totzeiten, Jitter, etc, die beispielsweise zu einer unerwünschten Verschiebung eines Ereignisses in einen anderen Kommunikationszyklus bewirken, vermieden, zumindest aber detektiert werden.

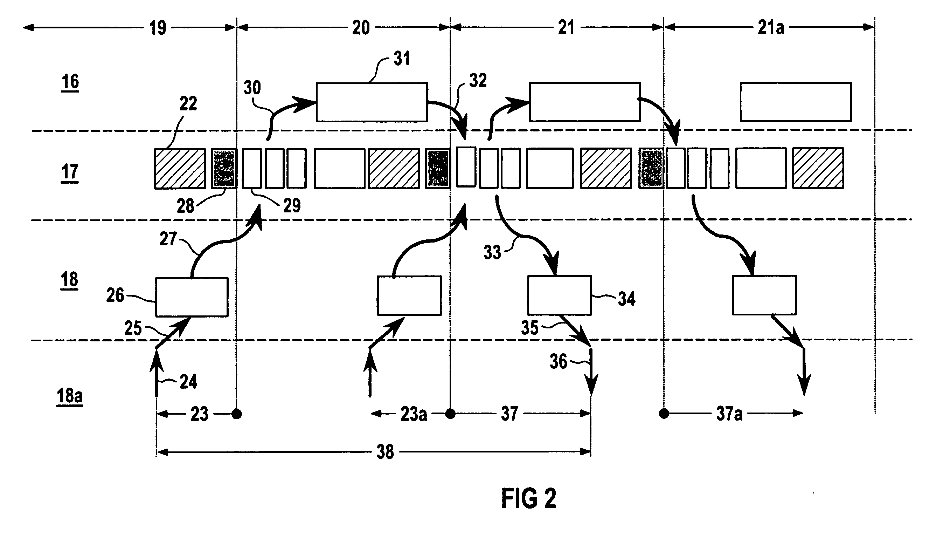

In FIG 2 ist die prinzipielle Arbeitsweise in einem synchronen, getakteten Kommunikationssystem im Bereich verteilter Automatisierungssysteme dargestellt. Zur Verdeutlichung sind beispielhaft vier aufeinanderfolgende Kommunikationszyklen, Kommunikationszyklus n 19, Kommunikationszyklus n+1 20, Kommunikationszyklus n+2 21 und Kommunikationszyklus n+3 21a dargestellt. Weiterhin ist die prinzipielle Arbeitsweise zwischen Eintritt eines Eingangsereignisses 24 und dem entsprechenden Ausgabeereignis 36 in vier Ebenen unterteilt, nämlich in eine Kontrolleinheitenebene 16, eine Datennetzebene 17, eine Automatisierungskomponentenebene 18 und eine Prozessschnittstellenebene 18a. Als zur Kontrolleinheitenebene 16 zugehörige Teilnehmer sind Master-Geräte, wie z.B. Kontrolleinheit 8 zu nennen, während zur Automatisierungskomponentenebene 18 Automatisierungskomponenten, wie beispielsweise die dezentralen Ein-/Ausgabe-Baugruppen 2, 3, die digitalen Antriebe 4, 5, 6 oder sonstige Feld- und/oder Peripheriegeräte, gehören. Die Datennetzebene 17 kennzeichnet die Verbindung zwischen den beiden genannten Ebenen 16 und 18 durch das Datennetz 1 und die Prozessschnittstellenebene 18a kennzeichnet den Durchgriff der auf der Ebene 18 befindlichen Automatisierungskomponenten auf die darunter liegenden Prozesse und/oder Prozesskomponenten. So handelt es sich beim Eingangsereignis 24 bei Antrieben beispielsweise um die Erfassung von Geberistwerten, bei dezentralen Ein-/Ausgabebaugruppen um die Erfassung z.B. von Istwerten der nachfolgend angeschlossenen Sensorik. Beim Ausgabeereignis 36 handelt es sich bei Antrieben z.B. um die Sollwertausgabe an die entsprechenden angeschlossenen Leistungsteile, bei den dezentralen Ein-/Ausgabe-Baugruppen z.B. um die Sollwertausgabe an die entsprechende angeschlossene Aktorik.

Die dargestellte Arbeitsweise in FIG 2 kennzeichnet den eingeschwungenen Zustand, d.h. die dezentralen Ein-/Ausgabe-Baugruppen 2, 3 sind bereits auf den Kommunikationstakt des Datennetzes 1 synchronisiert, d.h. auf der Automatisierungskomponentenebene 18, beispielsweise den dezentralen Ein-/Ausgabe-Baugruppen 2 ist der verwendete Kommunikationstakt und damit die Länge eines Kommunikationszyklus bekannt, da dies beim Hochfahren des Systems festgelegt und allen angeschlossenen Teilnehmern über das Datennetz 1 mitgeteilt wurde. Der Kommunikationstakt ist einstellbar, wird wenigstens einmal beim Hochfahren des Systems festgelegt und bleibt danach bis zu einer eventuellen neuen Festlegung konstant. Vorteil der Einstellbarkeit ist, dass der verwendete Kommunikationstakt und damit die Länge eines Kommunikationszyklus je nach Anwendung variiert und damit an unterschiedliche Rahmenbedingungen angepasst werden kann.

Die Synchronisierung der Teilnehmer auf den verwendeten Kommunikationstakt erfolgt durch das sogenannte global control-Datenpaket 28, das jeweils den Anfang des nächsten Kommunikationszyklus unmittelbar anzeigt und deshalb rechtzeitig an alle Teilnehmer gesendet wird. Dieses Datenpaket 28 wird beim Hochfahren des Systems von den Teilnehmern ausgewertet, wodurch sich diese auf den Kommunikationstakt des Kommunikationssystems aufsynchronisieren können. Um eine Überschneidung bei der Datenübertragung von einem Kommunikationszyklus in den folgenden zu verhindern und ein präzises Auswerten des Datenpakets 28 und somit die zweifelsfreie Signalisierung des jeweiligen Beginns des unmittelbar anschließenden Kommunikationszyklus zu gewährleisten, werden unmittelbar vor dem Senden des global control-Datenpakets 28 für eine diskrete Zeit keine Daten gesendet. Dies wird als aktives Warten bezeichnet, angedeutet durch die Reserve 22. Aus Gründen der Übersichtlichkeit ist die Reserve 22 nur einmal bezeichnet. Während des laufenden Betriebs zeigt das global control-Datenpaket 28 selbstverständlich immer unmittelbar den Anfang des nächsten Kommunikationszyklus an. Besonders vorteilhaft ist es, dass in der dargestellten Ausprägung insbesondere die dezentralen Ein-/Ausgabe-Baugruppen 2, 3, das global control-Datenpaket 28 auswerten und sich damit ebenfalls auf den verwendeten Kommunikationstakt aufsynchronisieren können. Dadurch können die dezentralen Ein-/Ausgabe-Baugruppen 2, 3, wie die anderen Teilnehmer isochron arbeiten, wodurch eine deutliche Erhöhung der zeitlichen Genauigkeit sowohl bei der Erfassung von Eingangsereignissen, als auch beim Schalten von Ausgängen, insbesondere der dezentralen Ein-/Ausgabe-Baugruppen erreicht wird.

Für die einzelnen Teilnehmer, insbesondere für die dezentralen Ein-/Ausgabe-Baugruppen 2, 3, ist deshalb die Länge eines Kommunikationszyklus und damit insbesondere die Länge der Kommunikationszyklen n 19, n+1 20, n+2 21 und n+3 21a bekannt. Weiterhin ist durch das global control-Datenpaket 28 auch der Anfang eines Kommunikationszyklus festgelegt und damit auch der Anfang des Kommunikationszyklus n+1 20 den einzelnen Teilnehmern, insbesondere den dezentralen Ein-/Ausgabe-Baugruppen 2, 3 bekannt. Damit kann auch der zeitliche Abstand 23 zwischen Eingangsereignis 24, beispielsweise getaktete Istwerterfassung und Anfang des Kommunikationszyklus n+1 20, und damit für jeden Kommunikationszyklus, exakt festgelegt werden. Besonders vorteilhaft ist, dass dieser zeitliche Abstand 23 einstellbar ist und beispielsweise von der dezentralen Ein-Ausgabe-Baugruppe 2, je nach Anwendungsfall optimal festgelegt werden kann. Da jeder Kommunikationszyklus gleich lang ist, kann ein Eingangsereignis 24 in jedem Kommunikationszyklus, insbesondere in den Kommunikationszyklen n 19 und n+1 20 immer zum gleichen Zeitpunkt von der dezentralen Ein-Ausgabe-Baugruppe 2 erfasst werden, d.h. der zeitliche Abstand 23 und 23a ist in den Kommunikationszyklen n 19 und n+1 20 und damit in jedem Kommunikationszyklus exakt gleich, sofern keine Veränderungen von einem Teilnehmer vorgenommen werden. Dadurch kann insbesondere erreicht werden, dass eine Istwerterfassung zwingend in jedem Kommunikationszyklus einmal und immer exakt zum gleichen Zeitpunkt relativ zum Anfang bzw. Ende des jeweiligen Kommunikationszyklus durchgeführt wird. Aus Gründen der übersichtlichen Darstellung ist der zeitliche Abstand 23 in den Kommunikationszyklen n+2 21 und n+3 21a nicht dargestellt.

Die in FIG 2 offenbarte Arbeitsweise, insbesondere die Erfassung eines Eingangsereignisses 24 kann selbstverständlich, nicht nur bei einer dezentralen Ein-/Ausgabe-Baugruppe 2 in jedem Kommunikationszyklus zum selben Zeitpunkt synchron zum Kommunikationstakt erfolgen, sondern kann in jedem Kommunikationszyklus auch parallel für mehrere dezentrale Ein-/Ausgabe-Baugruppen 2,3 synchron durchgeführt werden kann, d.h. die Erfassung und Registrierung von Eingangsereignissen 24 von mehreren dezentralen Ein-/Ausgabe-Baugruppen 2,3 immer gleichzeitig zum selben Zeitpunkt mit dem zeitlichen Abstand 23 und synchron zum Kommunikationstakt kann erzwungen bzw. geplant durchgeführt werden. Auch hier sind anstelle der oder zusammen mit den dezentralen Ein-/Ausgabe-Baugruppen 2,3 andere Automatisierungskomponenten, insbesondere Antriebe 4,5 denkbar. Dies bedeutet insbesondere, dass die Registrierung und Erfassung von Eingangsereignissen 24 auch zwischen dezentralen Ein-/Ausgabe-Baugruppen 2,3 und anderen Automatisierungskomponente, insbesondere Antrieben 4,5 so synchronisiert werden kann, dass sie immer gleichzeitig zum selben Zeitpunkt mit dem zeitlichen Abstand 23 und synchron zum Kommunikationstakt erzwungen bzw. geplant durchgeführt werden kann. Der zeitliche Abstand 23 wird dabei beispielsweise von der dezentralen Ein-/Ausgabe-Baugruppe 2 so gewählt, dass die Signalerfassung 25 auf der Automatisierungskomponentenebene 18 beispielsweise von der dezentralen Ein-/Ausgabe-Baugruppe 2 zu einem Zeitpunkt durchgeführt wird, dass eine Signalkonvertierung 26 noch so stattfindet, dass die Datenweiterleitung 27 unmittelbar mit Beginn des nächsten Kommunikationszyklus n+1 20 fortgesetzt werden kann. Der unmittelbare Anfang des nächsten Kommunikationszyklus n+1 20 wird dabei allen Teilnehmern durch das global control-Datenpaket 28 mitgeteilt. Aus Gründen der übersichtlichen Darstellung ist auf der Datennetzebene 17 das Datenpaket 29, das grau markierte global control-Datenpaket 28 sowie die Reserve 22 jeweils nur einmal bezeichnet worden. Die unterschiedliche Länge der nicht bezeichneten Datenpakete hat dabei keine besondere Bedeutung, es verdeutlicht nur, dass die Länge der einzelnen Datenpakete inhaltsabhängig und damit variabel ist. Am Anfang des Kommunikationszyklus n+1 20 erfolgt nun die Datenweiterleitung 27 auf der Datennetzebene 17. Die weitergeleiteten Datenpakete sind beispielhaft am Datenpaket 29 angedeutet. Innerhalb des Kommunikationszyklus n+1 20 erfolgt nun die Datenübergabe 30 der weitergeleiteten Daten von der Datennetzebene 17 an die Kontrolleinheitenebene 16, beispielsweise an die entsprechende Kontrolleinheit 8. In der Kontrolleinheit 8 erfolgt dann die entsprechende Datenverarbeitung 31. Kontrolleinheit 8 ermittelt während der Datenverarbeitung 31 aus den übermittelten Daten, beispielsweise Istwerten, die entsprechenden Antwortdaten, beispielsweise Sollwerte, und schließt diese Berechnungen im selben Kommunikationszyklus n+1 20 so ab, dass die Kontrolleinheit 8 eine Datenübergabe 32, beispielsweise die berechneten Sollwerte, zum Beginn des nächsten Kommunikationszyklus n+2 21 von der Kontrolleinheitenebene 16 an die Datennetzebene 17 durchführen kann. Auch diese Datenübergabe 32 erfolgt synchron zum Kommunikationstakt, und kann in jedem Kommunikationszyklus durchgeführt werden. Von der Datennetzebene 17 erfolgt eine Datenübermittlung 33 noch innerhalb des Kommunikationszyklus n+2 21 an die Automatisierungskomponentenebene 18, beispielsweise an die dezentrale Ein-/Ausgabe-Baugruppe 2 so, dass diese eine entsprechende Datenkonvertierung 34 der erhaltenen Daten in für die zu steuernden Geräte interpretierbare Signale und die entsprechende Signalausgabe 35 so durchführen kann, dass ein festlegbarer, konstanter zeitlicher Abstand 37 zwischen Anfang des aktuellen Kommunikationszyklus n+2 21 und dem Ausgabeereignis 36 eingehalten wird. Das Ausgabeereignis 36 erfolgt damit noch innerhalb des Kommunikationszyklus n+2 21, wobei der zeitliche Abstand 37 einstellbar ist und beispielsweise von der dezentralen Ein-Ausgabe-Baugruppe 2, je nach Anwendungsfall optimal festgelegt wird. Das Ausgabeereignis 36 kann also in jedem Kommunikationszyklus, insbesondere in den Kommunikationszyklen n+2 21 und n+3 21a immer zum gleichen Zeitpunkt taktsynchron durchgeführt werden, d.h. der zeitliche Abstand 37 und 37a ist in den Kommunikationszyklen n+2 21 und n+3 21a und damit in jedem Kommunikationszyklus exakt gleich, sofern keine Veränderungen von einem Teilnehmer vorgenommen werden. Somit kann die zeitliche Genauigkeit beim Schalten der übermittelten Daten, beispielsweise Sollwerte, also die Signalausgabe 35 von den zugehörigen dezentralen Ein-/Ausgabe-Baugruppen z.B. von der dezentralen Ein-/Ausgabe-Baugruppe 2 außerordentlich exakt festgelegt werden. Der zeitliche Abstand 38 zwischen Eingangsereignis 24 und Ausgabeereignis 36 kann dadurch also so optimiert werden, dass er maximal zwei Kommunikationszyklen auseinander liegt, was bei vielen Anwendungen in verteilten Automatisierungssystemen im Bereich Antriebstechnik von grosser Bedeutung ist. Besonders vorteilhaft ist es außerdem, dass die Schaltung eines Ausgabeereignisses 36 nicht nur von einer dezentralen Ein-/Ausgabe-Baugruppe 2 in jedem Kommunikationszyklus zum selben Zeitpunkt synchron zum Kommunikationstakt, sondern in jedem Kommunikationszyklus parallel von mehreren dezentralen Ein-/Ausgabe-Baugruppen 2,3 synchron durchgeführt werden kann, d.h. die Schaltung von Ausgabeereignissen 36 von mehreren dezentralen Ein-/Ausgabe-Baugruppen 2,3 immer gleichzeitig zum selben Zeitpunkt mit dem zeitlichen Abstand 37 und synchron zum Kommunikationstakt kann erzwungen bzw. geplant durchgeführt werden. Auch hier sind anstelle der oder zusammen mit den dezentralen Ein-/Ausgabe-Baugruppen 2,3 andere Automatisierungskomponenten, insbesondere Antriebe 4,5 denkbar. Dies bedeutet insbesondere, dass die Schaltung von Ausgabeereignissen 36 auch zwischen dezentralen Ein-/Ausgabe-Baugruppen 2,3 und anderen Automatisierungskomponente, insbesondere Antrieben 4,5, so synchronisiert werden kann, dass sie immer gleichzeitig zum selben Zeitpunkt mit dem zeitlichen Abstand 37 und synchron zum Kommunikationstakt erzwungen bzw. geplant durchgeführt werden kann. Dies ist insbesondere dann von Vorteil, wenn die Ausgabeereignisse 36, beispielsweise Sollwertausgaben, zu steuernde Geräte betreffen, die im interpolatorischen Verbund zusammenarbeiten und deshalb dasselbe Verständnis von beispielsweise Lageinformationen bei Maschinen haben müssen, insbesondere, wenn dies die Steuerung von Achsen betrifft. Aus Gründen der Übersichtlichkeit ist der zeitliche Abstand 37 und 37a nur für die Kommunikationszyklen n+2 21 und n+3 21a dargestellt worden.

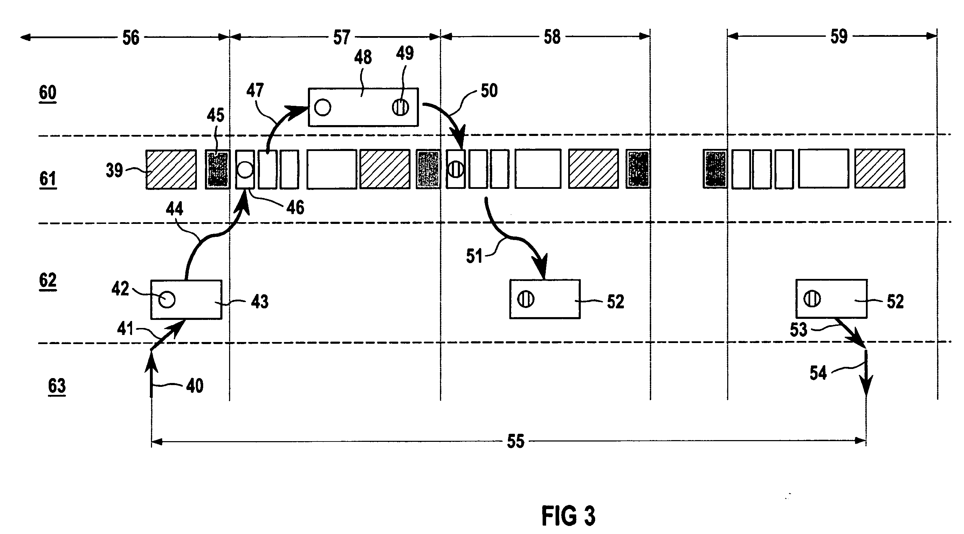

In FIG 3 ist die prinzipielle Arbeitsweise in einem synchronen, getakteten Kommunikationssystem im Bereich verteilter Automatisierungssysteme unter Verwendung eines Stempels dargestellt. Zur Verdeutlichung sind beispielhaft drei aufeinanderfolgende Kommunikationszyklen, Kommunikationszyklus m 56, Kommunikationszyklus m+1 57 und Kommunikationszyklus m+2 58 sowie ein weiterer, zu einem späteren Zeitpunkt auftretender, aber nicht unmittelbar anschließender Kommunikationszyklus m+x 59 dargestellt. Weiterhin ist die prinzipielle Arbeitsweise zwischen Eintritt eines Eingangsereignisses 40 und dem entsprechenden Ausgabeereignis 54 in vier Ebenen unterteilt, nämlich in eine Kontrolleinheitenebene 60, eine Datennetzebene 61, eine Automatisierungskomponentenebene 62 und eine Prozessschnittstellenebene 63. Alle vier Ebenen symbolisieren dieselben Ebenen die auch in FIG 2 verwendet wurden. Die dargestellte Arbeitsweise in FIG 3 kennzeichnet analog zur FIG 2 ebenfalls den eingeschwungenen Zustand, d.h. alle Teilnehmer, insbesondere die Geräte auf der Automatisierungskomponentenebene 62, beispielsweise die dezentralen Ein-/Ausgabe-Baugruppen 2 und 3, sind bereits auf den Kommunikationstakt des Datennetzes 1 synchronisiert. Den einzelnen Teilnehmern des Kommunikationssystems, insbesondere den dezentralen Ein-/Ausgabe-Baugruppen 2 und 3, ist deshalb die Länge eines Kommunikationszyklus und damit insbesondere die Länge der Kommunikationszyklen m 56, m+1 57, m+2 58 sowie m+x 59 bekannt. Auch der Anfang eines Kommunikationszyklus ist analog zum Mechanismus der in FIG 2 beschrieben ist, durch das global control-Datenpaket 45 festgelegt und damit den Teilnehmern des Kommunikationssystems bekannt.

Auf Basis des in FIG 1 offenbarten Mechanismus der Verwendung eines Zählers zur Identifizierung des aktuellen Kommunikationszyklus kann darüber hinaus beispielsweise von der dezentralen Ein-/Ausgabe-Baugruppen 2 ein Zeitstempel aus einem entsprechenden Zählerstand oder dem korrespondierenden Kommunikationszyklus generiert werden, der aus zwei Teilen besteht. Der eine Teil kennzeichnet dabei den aktuellen Kommunikationszyklus, beispielsweise den Kommunikationszyklus m 56, in dem die dezentrale Ein-/Ausgabe-Baugruppe 2 die Signalerfassung 41 eines Eingangsereignisses 40 eines zu steuernden Geräts an ihrem Eingang durchführt und der andere Teil präzisiert den Zeitpunkt der Signalerfassung 41 relativ zum Anfang oder zum Ende innerhalb des aktuellen Kommunikationszyklus, beispielsweise des Kommunikationszyklus m 56. Dieser so generierte Zeitstempel wird zusammen mit der Art des Eingangsereignisses, beispielsweise positive oder negative Schaltflanke, etc., als Stempel 42 auf der Automatisierungskomponentenebene 62, beispielsweise von der dezentralen Ein-/Ausgabe-Baugruppe 2 bei der Signalerfassung 41 des Eingangsereignisses 40 oder der Signalkonvertierung 43 den Daten hinzugefügt, sodass der Erfassungszeitpunkt und Art des Schaltereignisses dieser Daten in der dezentralen Ein-/Ausgabe-Baugruppe 2 exakt protokolliert und beim Weiterleiten Bestandteil der Daten ist. Der Stempel 42 ist aus Gründen der Übersichtlichkeit nur einmal bezeichnet. Die Datenweiterleitung 44 auf der Datennetzebene 61, durch das Datenpaket 46 angedeutet, wird anschließend beispielsweise mit Beginn des nächsten Kommunikationszyklus m+1 57 fortgesetzt. Der unmittelbare Anfang des nächsten Kommunikationszyklus m+1 57 wird dabei durch Übertragung des global control-Datenpakets 45 allen Teilnehmern mitgeteilt. Um eine Überschneidung bei der Datenübertragung von einem Kommunikationszyklus in den folgenden zu verhindern und ein präzises Auswerten des Datenpakets 45 und somit die zweifelsfreie Signalisierung des jeweiligen Beginns des unmittelbar anschließenden Kommunikationszyklus zu gewährleisten, werden analog zur Beschreibung von FIG 2 unmittelbar vor dem Senden des global control-Datenpakets 45 für eine diskrete Zeit keine Daten gesendet. Dies wird als aktives Warten bezeichnet, angedeutet durch die Reserve 39. Aus Gründen der übersichtlichen Darstellung ist auf der Datennetzebene 61 das Datenpaket 46, das grau markierte global control-Datenpaket 45 sowie die Reserve 39 jeweils nur einmal bezeichnet worden. Die unterschiedliche Länge der nicht bezeichneten Datenpakete hat dabei keine besondere Bedeutung, es verdeutlicht nur, dass die Länge der einzelnen Datenpakete inhaltsabhängig und damit variabel ist. Innerhalb des Kommunikationszyklus m+1 57 erfolgt nun die Datenübergabe 47 der weitergeleiteten Daten mit Stempel 42 von der Datennetzebene 61 an die Kontrolleinheitenebene 60 beispielsweise an die Kontrolleinheit 8, von der die Datenverarbeitung 48 durchgeführt wird. Dabei wird von der Kontrolleinheit 8 sowohl der Stempel 42 als auch der Inhalt der übermittelten Daten ausgewertet. Darauf basierend berechnet die Kontrolleinheit 8 Antwortdaten und in Abhängigkeit des Inhalts des Stempels 42 den erforderlichen Zeitpunkt für die zukünftige Ausgabe der Antwortdaten an das entsprechende zu steuernde Gerät am Ausgang beispielsweise der dezentralen Ein-/Ausgabe-Baugruppe 2, und die Art des Ausgabeereignisses, beispielsweise positive oder negative Schaltflanke, etc., mit der geschaltet werden soll. Die berechneten Antwortdaten, die für das zu steuernde Gerät bestimmt sind, werden vor der Übertragung an die dezentrale Ein-/Ausgabe-Baugruppe 2 von der Kontrolleinheit 8 mit einem Stempel 49 der aus dem berechneten Zeitstempel, bezogen auf den erforderlichen, geplanten Zeitpunkt der Signalausgabe und dem Ausgabe-Schaltereignis besteht, versehen, sodass der Stempel 49 beim Weiterleiten Bestandteil der Antwortdaten ist. Dabei besteht der Teil des Stempels 49, der den Zeitstempel charakterisiert wiederum aus zwei Teilen. Der eine Teil kennzeichnet dabei den Kommunikationszyklus, beispielsweise den Kommunikationszyklus m+x 59, in dem die dezentrale Ein-/Ausgabe-Baugruppe 2 die Signalausgabe 53 eines Ausgangsereignisses 54 an ein zu steuerndes Gerät an ihrem Ausgang durchführen soll und der andere Teil präzisiert den Ausgabezeitpunkt der Signalausgabe 53 relativ zum Anfang oder zum Ende innerhalb dieses so bestimmten Kommunikationszyklus, beispielsweise des Kommunikationszyklus m+x 59. Der Stempel 49 ist aus Gründen der Übersichtlichkeit nur einmal bezeichnet. Von der Kontrolleinheitenebene 60 aus, beispielsweise von der Kontrolleinheit 8, erfolgt die Datenübergabe 50 der berechneten Antwortdaten mit dem Stempel 49 beispielsweise zum Beginn des nächsten Kommunikationszyklus m+2 58 an die Datennetzebene 61. Auch diese Datenübergabe 50 erfolgt synchron zum Kommunikationstakt und kann in jedem Kommunikationszyklus durchgeführt werden. Von der Datennetzebene 61 erfolgt eine Datenübermittlung 51 beispielsweise noch innerhalb des Kommunikationszyklus m+2 58 an die Automatisierungskomponentenebene 62, beispielsweise an die dezentrale Ein-/Ausgabe-Baugruppe 2, die den Stempel 49, mit dem die empfangenen Daten versehen sind, auswertet. Je nach Ergebnis der Auswertung des Stempels 49, insbesondere des Teils, der den Zeitpunkt der Ausgabe der Daten bezeichnet, werden die Daten von der dezentralen Ein-/Ausgabe-Baugruppe 2 zwischengespeichert und erst zum vorgesehenen Zeitpunkt, beispielsweise im Kommunikationszyklus m+x 59 erfolgt die entsprechende Signalausgabe 53, beispielsweise Schaltung von Sollwerten am Ausgang der dezentralen Ein-/Ausgabe-Baugruppe 2 mit dem im Stempel 49 vorgesehenen Schaltereignis, an das zu steuernde Gerät mit dem Ausgabeereignis 36. Die vorher notwendige Datenkonvertierung 52 der erhaltenen Daten in für das zu steuernde Gerät interpretierbare Signale, kann dabei zu einem beliebigen Zeitpunkt zwischen Datenübermittlung 51 im Kommunikationszyklus m+2 58 und der Signalausgabe 53 im Kommunikationszyklus m+x 59 von der dezentralen Ein-/Ausgabe-Baugruppe 2 durchgeführt werden.

Somit kann abhängig vom Zeitpunkt der Registrierung eines auftretenden Eintrittsereignisses 40 am Eingang einer dezentralen Ein-/Ausgabe-Baugruppe das Schalten eines Ausgabeereignisses 54 am Ausgang der dezentralen Ein-/Ausgabe-Baugruppe exakt geplant und mit einer außerordentlichen zeitlichen Präzision durchgeführt werden, was im Bereich Antriebstechnik in verteilten Automatisierungssystemen, beispielsweise bei holzverarbeitenden Maschinen oder für das Schalten von Nocken, etc. außerordentlich vorteilhaft ist. Der zeitliche Abstand 55 zwischen Eingangsereignis 40 und Ausgabeereignis 54 ist also für jede beliebige Situation im geschilderten Anwendungsbereich individuell mit jeweils der selben hohen zeitlichen Genauigkeit einstellbar und erreichbar, wodurch die Abhängigkeit von Totzeiten von betroffenen Teilnehmern des Kommmunikationssystems sehr stark reduziert wird.

Zusammenfassend betrifft die Erfindung ein synchrones, getaktetes Kommunikationssystem, beispielsweise ein verteiltes Automatisierungssystem, dessen Teilnehmer beliebige Automatisierungskomponenten sein können und die über ein Datennetz 1 miteinander gekoppelt sind. Mittels des offenbarten Verfahrens zur Integration dezentraler Ein-/Ausgabe-Baugruppen 2, 3 können diese dezentralen Ein-/Ausgabe-Baugruppen 2, 3 so in das synchrone, getaktete Kommunikationssystem eingebunden werden, dass sie dessen Eigenschaften uneingeschränkt nutzen können. Damit ist insbesondere die Erfassung von Eingangssignalen und die Ausgabe von Ausgangssignalen in einer deterministischen und synchronen Art und Weise in den dezentralen Ein-/Ausgabe-Baugruppen 2, 3 möglich. Darüber hinaus ermöglicht das offenbarte Verfahren Eingangssignale mit einer Genauigkeit kleiner als die Länge eines Kommunikationszyklus des Kommunikationssystems zu erfassen und das Schalten von Ausgangssignalen in kleineren Zeitgranularitäten als die Länge eines Kommunikationszyklus unterstützen, welches insbesondere Anwendung z.B. für Schaltnocken findet. Zusätzlich wird durch die Erfindung eine Synchronisierung für Istwerterfassungen und Sollwertausgaben von verschiedenartigsten Automatisierungskomponenten wie z.B. dezentrale Ein-/Ausgabe-Baugruppen 2, 3 und digitale Antriebe 4, 5, 6 ermöglicht. Als Datennetz 1 des Kommunikationssystems sind dabei alle möglichen gängigen Bussysteme wie z.B. Feldbus, Profibus, Ethernet, Industrial Ethernet, FireWire oder auch PC-interne Bussysteme (PCI), etc., denkbar.

## Patentansprüche

1. Verfahren zur Einbindung einer oder mehrerer dezentraler Ein-/Ausgabe-Baugruppen (2, 3) in ein synchrones, getaktetes Kommunikationssystem mit Äquidistanzeigenschaften im Bereich industrieller Anlagen zwischen wenigstens zwei Teilnehmern, insbesondere einer Kontrolleinheit (8) und einem zu steuernden Gerät, und wenigstens einem Datennetz (1), wobei sich mindestens eine dezentrale Ein-/Ausgabe-Baugruppe (2, 3) auf den Kommunikationstakt des Kommunikationssystems synchronisiert und wobei wenigstens einer der Teilnehmer des Kommunikationssystems einen Zähler (9) aufweist, **dadurch**
**gekennzeichnet,**
**dass** vom Teilnehmer mit dem Zähler (9) mittels des Zählers (9) die Anzahl der Kommunikationszyklen vom Hochfahren des Systems an, von Null oder einem beliebigen Offset beginnend im laufenden Betrieb permanent mitgezählt wird und
**dass** ein Zeitstempel aus einem Kommunikationszyklus, der aus dem Zählerstand abgeleitet wird, generiert wird, wobei der Zeitstempel aus zwei Teilen besteht, wobei der eine Teil den Kommunikationszyklus des Kommunikationssystems bestimmt, in welchem Signale eines zu steuernden Geräts am Eingang einer dezentralen Ein-/Ausgabe-Baugruppe (2, 3) registriert und erfasst werden oder Signale am Ausgang einer dezentralen Ein-/Ausgabe-Baugruppe (2, 3) geschaltet und an das zu steuernde Geräte ausgegeben werden sollen und der andere Teil den Zeitpunkt relativ zum Anfang oder zum Ende des jeweils relevanten Kommunikationszyklus des Kommunikationssystems bestimmt.

2. Verfahren nach Anspruch 1,
**dadurch gekennzeichnet,**
**dass** jeweils mit Beginn eines neuen Kommunikationszyklus der Zähler (9) inkrementiert wird.

3. Verfahren nach Anspruch 1 oder 2,
**dadurch gekennzeichnet,**
**dass** der jeweils aktuelle Stand des Zählers (9) den jeweils aktuellen Kommunikationszyklus charakterisiert.

4. Verfahren nach einem der vorstehenden Ansprüche,
**dadurch gekennzeichnet,**
**dass** ein beliebiger Kommunikationszyklus aus einer Zahl, insbesondere einem Zählerstand abgeleitet und/oder berechnet wird.

5. Verfahren nach einem der vorstehenden Ansprüche,
**dadurch gekennzeichnet,**
**dass** der jeweils aktuelle Zählerstand und/oder aktuelle Kommunikationszyklus und/oder aktuelle Zeitstempel vom Teilnehmer mit dem Zähler (9) an wenigstens einen weiteren Teilnehmer des Kommunikationssystems mittels des Datennetzes (1) verteilt wird.

6. Verfahren nach einem der vorstehenden Ansprüche,
**dadurch gekennzeichnet,**
**dass** der jeweils aktuelle Zählerstand vom Teilnehmer mit dem Zähler (9) an wenigstens einen weiteren Teilnehmer des Kommunikationssystems mittels des Datennetzes (1) verteilt und von den jeweiligen Teilnehmern selbst der aktuelle Kommunikationszyklus und/oder aktuelle Zeitstempel aus dem übermittelten aktuellen Zählerstand ermittelt wird.

7. Verfahren nach einem der vorstehenden Ansprüche,
**dadurch gekennzeichnet,**
**dass** Signale eines zu steuernden Geräts bei deren Registrierung und Erfassung am Eingang einer dezentralen Ein-/Ausgabe-Baugruppe (2, 3) von der Ein-/Ausgabe-Baugruppe (2, 3) mit dem zu diesem Zeitpunkt aktuellen Zeitstempel und dem Erfassungs-Schaltereignis versehen, in ein für das Datennetz (1) kompatibles Datenformat umgewandelt, mit dem Zeitstempel und dem Schaltereignis über das Datennetz (1) an die Kontrolleinheit (8) weitergeleitet, dort ausgewertet und verarbeitet werden.

8. Verfahren nach einem der vorstehenden Ansprüche,
**dadurch gekennzeichnet,**
**dass** Daten, die für das zu steuernde Gerät bestimmt sind, vor der Übertragung an die dezentrale Ein-/Ausgabe-Baugruppe (2, 3) von der Kontrolleinheit (8) mit einem Zeitstempel, bezogen auf den Zeitpunkt der geplanten Signalausgabe und einem Ausgabe-Schaltereignis versehen und mit diesem Zeitstempel und dem Schaltereignis über das Datennetz (1) an die dezentrale Ein-/Ausgabe-Baugruppe (2, 3) übertragen werden.

9. Verfahren nach einem der vorstehenden Ansprüche,
**dadurch gekennzeichnet,**
**dass** Daten, die mit einem Zeitstempel, der sich auf die geplante Signalausgabe bezieht, und einem Ausgabe-Schaltereignis versehen und für das zu steuernde Gerät bestimmt sind, von der dezentralen Ein-/Ausgabe-Baugruppe (2, 3) in für das zu steuernde Gerät interpretierbare Signale umgewandelt und zu dem Zeitpunkt, der durch den übertragenen Zeitstempel vorgegeben ist, am Ausgang der dezentralen Ein-/Ausgabe-Baugruppe (2, 3) gemäß des Schaltereignisses geschaltet und an das zu steuernde Gerät ausgegeben werden.

10. Verfahren nach einem der vorstehenden Ansprüche,
**dadurch gekennzeichnet,**
**dass** Signale des zu steuernden Geräts, die am Eingang der dezentralen Ein-/Ausgabe-Baugruppe (2, 3) zum Gerät anliegen, bezogen auf den Kommunikationstakt des Kommunikationssystems von der dezentralen Ein-/Ausgabe-Baugruppe (2, 3) synchron erfasst, in ein für das Datennetz (1) kompatibles Datenformat umgewandelt und synchron über das Datennetz (1) zur Verarbeitung an die Kontrolleinheit (8) weitergeleitet werden.

11. Verfahren nach einem der vorstehenden Ansprüche,
**dadurch gekennzeichnet,**
**dass** Daten, die von der Kontrolleinheit (8) über das Datennetz (1) synchron an die dezentrale Ein-/Ausgabe-Baugruppe (2, 3) übertragen, in der Ein-/Ausgabe-Baugruppe (2, 3) in für das zu steuernde Gerät interpretierbare Signale umgewandelt und, bezogen auf den Kommunikationstakt des Kommunikationssystems synchron am Ausgang der dezentralen Ein-/Ausgabe-Baugruppe (2, 3) geschaltet und zum Gerät weitergeleitet werden.

12. Verfahren nach einem der vorstehenden Ansprüche,
**dadurch gekennzeichnet,**
**dass** der Zeitpunkt für die Registrierung und Erfassung von Signalen eines zu steuernden Geräts am Eingang der dezentralen Ein-/Ausgabe-Baugruppe (2, 3), bezogen auf den Kommunikationstakt des Kommunikationssystems oder eines daraus abgeleiteten Takts einstellbar ist.

13. Verfahren nach einem der vorstehenden Ansprüche,
**dadurch gekennzeichnet,**
**dass** der Zeitpunkt für die Schaltung und Weiterleitung von Signalen am Ausgang der dezentralen Ein-/Ausgabe-Baugruppe (2, 3) an das zu steuernde Gerät, bezogen auf den Kommunikationstakt des Kommunikationssystems oder eines daraus abgeleiteten Takts einstellbar ist.

14. Verfahren nach einem der vorstehenden Ansprüche,
**dadurch gekennzeichnet,**
**dass** die Registrierung und Erfassung von Signalen am Eingang der dezentralen Ein-/Ausgabe-Baugruppen (2, 3) von wenigstens zwei zu steuernden Geräten, die jeweils mit einer unterschiedlichen dezentralen Ein-/Ausgabe-Baugruppe (2, 3) verbunden sind, so synchronisiert wird, dass die Registrierung und Erfassung, bezogen auf den Kommunikationstakt des Kommunikationssystems bei den jeweiligen dezentralen Ein-/Ausgabe-Baugruppen (2, 3) zum selben Zeitpunkt erfolgt.

15. Verfahren nach einem der vorstehenden Ansprüche,
**dadurch gekennzeichnet,**
**dass** die Ausgabe von Signalen am Ausgang der dezentralen Ein-/Ausgabe-Baugruppen (2, 3) an wenigstens zwei zu steuernde Geräte, die jeweils mit einer unterschiedlichen dezentralen Ein-/Ausgabe-Baugruppe (2, 3) verbunden sind, so synchronisiert wird, dass die Ausgabe, bezogen auf den Kommunikationstakt des Kommunikationssystems bei den jeweiligen dezentralen Ein-/Ausgabe-Baugruppen (2, 3) zum selben Zeitpunkt erfolgt.

16. Verfahren nach einem der vorstehenden Ansprüche,
**dadurch gekennzeichnet,**
**dass** die Registrierung und Erfassung von Signalen am Eingang wenigstens einer dezentralen Ein-/Ausgabe-Baugruppe (2, 3) und wenigstens einer anderen Automatisierungskomponente, insbesondere einem Antrieb (4, 5, 6) so synchronisiert wird,
**dass** die Registrierung und Erfassung, bezogen auf den Kommunikationstakt des Kommunikationssystems bei der dezentralen Ein-/Ausgabe-Baugruppe (2, 3) und der Automatisierungskomponente zum selben Zeitpunkt erfolgt.

17. Verfahren nach einem der vorstehenden Ansprüche,
**dadurch gekennzeichnet,**
**dass** die Ausgabe von Signalen am Ausgang wenigstens einer dezentralen Ein-/Ausgabe-Baugruppe (2, 3) und wenigstens einer anderen Automatisierungskomponente, insbesondere einem Antrieb (4, 5, 6) so synchronisiert wird, dass die Signalausgabe, bezogen auf den Kommunikationstakt des Kommunikationssystems bei der dezentralen Ein-/Ausgabe-Baugruppe (2, 3) und der Automatisierungskomponente zum selben Zeitpunkt erfolgt.

18. Verfahren nach einem der vorstehenden Ansprüche,
**dadurch gekennzeichnet,**
**dass** innerhalb eines Kommunikationszyklus des Kommunikationssystems für jedes zu steuernde Gerät von den zugehörigen dezentralen Ein-/Ausgabe-Baugruppen (2, 3) wenigstens einmal Signale erfasst, in ein für das Datennetz (1) kompatibles Datenformat umgewandelt und synchron, bezogen auf den Kommunikationstakt des Kommunikationssystems über das Datennetz (1) zur Verarbeitung an die Kontrolleinheit (8) weitergeleitet werden.

19. Verfahren nach einem der vorstehenden Ansprüche,
**dadurch gekennzeichnet,**
**dass** die jeweilige Erfassung von Signalen bei einem zu steuernden Gerät zu einem solchen Zeitpunkt innerhalb eines Kommunikationszyklus des Kommunikationssystems erfolgt, so dass von der dezentralen Ein-/Ausgabe-Baugruppe (2, 3) eine Umwandlung der Signale in ein für das Datennetz (1) kompatibles Datenformat und eine Weiterleitung der Daten über das Datennetz (1) zur Verarbeitung an die Kontrolleinheit (8) im unmittelbar anschließenden Kommunikationszyklus und eine Umwandlung der Antwortdaten der Kontrolleinheit (8) in der dezentralen Ein-/Ausgabe-Baugruppe (2, 3) in für das zu steuernde Gerät interpretierbare Signale und deren Ausgabe an das zu steuernde Gerät im übernächsten Kommunikationszyklus erfolgt, so dass der Abstand zwischen Signalerfassung am zu steuernden Gerät und Ausgabe der Antwortsignale an das zu steuernde Gerät höchstens zwei Kommunikationszyklen des Kommunikationssystems beträgt.

20. Verfahren nach einem der vorstehenden Ansprüche,
**dadurch gekennzeichnet,**
**dass** von der dezentralen Ein-/Ausgabe-Baugruppe (2, 3) Kenndaten zur Verfügung gestellt werden, die von wenigstens einer Kontrolleinheit (8) über das Datennetz (1) abgerufen und ausgewertet werden können, wobei die Kenndaten die maximal mögliche Genauigkeit und den minimal möglichen Zeitpunkt bei der zeitlichen Erfassung von Signalen von einem zu steuernden Gerät umfassen.

21. Verfahren nach einem der vorstehenden Ansprüche,
**dadurch gekennzeichnet,**
**dass** von der dezentralen Ein-/Ausgabe-Baugruppe (2, 3) Kenndaten zur Verfügung gestellt werden, die von wenigstens einer Kontrolleinheit (8) über das Datennetz (1) abgerufen und ausgewertet werden können, wobei die Kenndaten die maximal mögliche Genauigkeit und den minimal möglichen Zeitpunkt bei der zeitlichen Ausgabe von Signalen an ein zu steuerndes Gerät umfassen.

22. Synchrones, getaktetes Kommunikationssystem mit Äquidistanzeigenschaften im Bereich industrieller Anlagen zwischen wenigstens zwei Teilnehmern, insbesondere einer Kontrolleinheit (8) und einem zu steuernden Gerät, wenigstens einem Datennetz (1) und wenigstens einer dezentralen Ein-/Ausgabe-Baugruppe (2, 3), wobei die Ein-/Ausgabebaugruppe auf den Kommunikationstakt des Kommunikationssystems synchronisiert ist und wobei wenigstens ein Teilnehmer einen Zähler (9) aufweist, **dadurch gekennzeichnet,**
**dass** der Teilnehmer mit dem Zähler (9) mittels des Zählers (9) die Anzahl der Kommünikationszyklen vom Hochfahren des Systems an von Null oder einem beliebigen Offset beginnend, im laufenden Betrieb permanent mitzählt und
**dass** das Kommunikationssystem zumindest ein Mittel aufweist, das einen Zeitstempel aus einem Kommunikationszyklus, der aus dem Zählerstand abgeleitet wird, generiert, wobei der Zeitstempel aus zwei Teilen besteht, wobei der eine Teil den Kommunikationszyklus des Kommunikationssystems bestimmt, in welchem Signale eines zu steuernden Geräts am Eingang einer dezentralen Ein-/Ausgabe-Baugruppe (2, 3) registriert und erfasst werden oder Signale am Ausgang einer Ein-/Ausgabe-Baugruppe (2, 3) geschaltet und an das zu steuernde Gerät ausgegeben werden sollen, und der andere Teil den Zeitpunkt relativ zum Anfang oder zum Ende des jeweils relevanten Kommunikationszyklus des Kommunikationssystems bestimmt.

23. Kommunikationssystem nach Anspruch 22,
**dadurch gekennzeichnet,**
**dass** der Teilnehmer mit dem Zähler (9) jeweils mit Beginn eines neuen Kommunikationszyklus den Zähler (9) inkrementiert.

24. Kommunikationssystem nach einem der Ansprüche 22 oder 23,
**dadurch gekennzeichnet,**
**dass** das Kommunikationssystem zumindest ein Mittel aufweist, das dafür sorgt, dass der jeweils aktuelle Stand des Zählers (9) den jeweils aktuellen Kommunikationszyklus charakterisiert.

25. Kommunikationssystem nach einem der Ansprüche 22 bis 24,
**dadurch gekennzeichnet,**
**dass** das Kommunikationssystem zumindest ein Mittel aufweist, das einen beliebigen Kommunikationszyklus aus einer Zahl, insbesondere einem Zählerstand, ableitet und/oder berechnet.

26. Kommunikationssystem nach einem der Ansprüche 22 bis 25,
**dadurch gekennzeichnet,**
**dass** das Kommunikationssystem zumindest ein Mittel aufweist, das einen Kommunikationszyklus durch eine digitalisierte Zahl darstellt.

27. Kommunikationssystem nach einem der Ansprüche 22 bis 26,
**dadurch gekennzeichnet,**
**dass** der Teilnehmer mit dem Zähler (9) den jeweils aktuellen Zählerstand an wenigstens einen weiteren Teilnehmer des Kommunikationssystems mittels des Datennetzes (1) verteilt und die jeweiligen Teilnehmer den aktuellen Kommunikationszyklus und/oder den aktuellen Zeitstempel selbst aus dem übermittelten aktuellen Zählerstand ermitteln.

28. Kommunikationssystem nach einem der Ansprüche 22 bis 27,
**dadurch gekennzeichnet,**
**dass** das Kommunikationssystem zumindest eine dezentrale Ein-/Ausgabe-Baugruppe (2, 3) aufweist, die Signale eines zu steuernden Geräts bei deren Registrierung und Erfassung am Eingang der dezentralen Ein-/Ausgabe-Baugruppe (2, 3) mit dem zu diesem Zeitpunkt aktuellen Zeitstempel und dem Erfassungs-schaltereignis versieht, in ein für das Datennetz (1) kompatibles Datenformat umwandelt, und mit dem Zeitstempel und dem Schaltereignis über das Datennetz (1) zur Auswertung und Verarbeitung an die Kontrolleinheit (8) weiterleitet.

29. Kommunikationssystem nach einem der Ansprüche 22 bis 28,
**dadurch gekennzeichnet,**
**dass** das Kommunikationssystem zumindest eine Kontrolleinheit (8) aufweist, die Daten, die für das zu steuernde Gerät bestimmt sind, vor Übertragung an die dezentrale Ein-/Ausgabe-Baugruppe (2, 3) mit einem Zeitstempel, bezogen auf den Zeitpunkt der geplanten Signalausgabe und einem Ausgabeschaltereignis versieht und mit diesem Zeitstempel und dem Schaltereignis über das Datennetz (1) an die dezentrale Ein-/Ausgabe-Baugruppe (2, 3) überträgt.

30. Kommunikationssystem nach einem der Ansprüche 22 bis 29,
**dadurch gekennzeichnet,**
**dass** das Kommunikationssystem zumindest eine dezentrale Ein-/Ausgabe-Baugruppe (2, 3) aufweist, die Daten, die mit einem Zeitstempel, der sich auf die geplante Signalausgabe bezieht, und einem Ausgabeschaltereignis versehen und für das zu steuernde Gerät bestimmt sind, in für das zu steuernde Gerät interpretierbare Signale umwandelt und zu dem Zeitpunkt, der durch den übertragenen Zeitstempel vorgegeben ist, am Ausgang der dezentralen Ein-/Ausgabe-Baugruppe (2, 3) gemäß des Schaltereignisses schaltet und an das zu steuernde Gerät ausgibt.

31. Kommunikationssystem nach einem der Ansprüche 22 bis 30,
**dadurch gekennzeichnet,**
**dass** das Kommunikationssystem zumindest eine dezentrale Ein-/Ausgabe-Baugruppe (2, 3) aufweist, die die Signale des zu steuernden Geräts, die am Eingang der dezentralen Ein-/Ausgabe-Baugruppe (2, 3) anliegen, bezogen auf den Kommunikationstakt des Kommunikationssystems synchron erfasst, in ein für das Datennetz (1) kompatibles Datenformat umwandelt und synchron über das Datennetz (1) zur Verarbeitung an die Kontrolleinheit (8) weiterleitet.

32. Kommunikationssystem nach einem der Ansprüche 22 bis 31,
**dadurch gekennzeichnet,**
**dass** das Kommunikationssystem zumindest eine dezentrale Ein-/Ausgabe-Baugruppe (2, 3) aufweist, die von der Kontrolleinheit (8) über das Datennetz (1) synchron gesendete Daten in für ein zu steuerndes Gerät interpretierbare Signale umwandelt und, bezogen auf den Kommunikationstakt des Kommunikationssystems synchron am Ausgang der dezentralen Ein-/Ausgabe-Baugruppe (2, 3) schaltet und zum Gerät weiterleitet.

33. Kommunikationssystem nach einem der Ansprüche 22 bis 32,
**dadurch gekennzeichnet,**
**dass** das Kommunikationssystem zumindest ein Mittel aufweist, das den Zeitpunkt für die Registrierung und Erfassung von Signalen eines zu steuernden Geräts am Eingang einer Ein-/Ausgabe-Baugruppe (2, 3), bezogen auf den Kommunikationstakt des Kommunikationssystems oder eines daraus abgeleiteten Takts einstellt.

34. Kommunikationssystem nach einem der Ansprüche 22 bis 33,
**dadurch, gekennzeichnet,**
**dass** das Kommunikationssystem zumindest ein Mittel aufweist, das den Zeitpunkt für die Schaltung und Weiterleitung von Signalen am Ausgang der dezentralen Ein-/Ausgabe-Baugruppe (2, 3) an das zu steuernde Gerät, bezogen auf den Kommunikationstakt des Kommunikationssystems oder eines daraus abgeleiteten Takts einstellt.

35. Kommunikationssystem nach einem der Ansprüche 22 bis 34,
**dadurch gekennzeichnet,**
**dass** das Kommunikationssystem zumindest ein Mittel aufweist, das die Registrierung und Erfassung von Signalen am Eingang der dezentralen Ein-/Ausgabe-Baugruppen (2, 3) von wenigstens zwei zu steuernden Geräten, die jeweils mit einer unterschiedlichen dezentralen Ein-/Ausgabe-Baugruppe (2, 3) verbunden sind, so synchronisiert, dass die Registrierung und Erfassung, bezogen auf den Kommunikationstakt des Kommunikationssystems bei den jeweiligen dezentralen Ein-/Ausgabe-Baugruppen (2, 3) zum selben Zeitpunkt erfolgt.

36. Kommunikationssystem nach einem der Ansprüche 22 bis 35,
**dadurch gekennzeichnet,**
**dass** das Kommunikationssystem zumindest ein Mittel aufweist, das die Ausgabe von Signalen am Ausgang der dezentralen Ein-/Ausgabe-Baugruppen (2, 3) an wenigstens zwei zu steuernde Geräte, die jeweils mit einer unterschiedlichen dezentralen Ein-/Ausgabe-Baugruppe (2, 3) verbunden sind, so synchronisiert, dass die Ausgabe, bezogen auf den Kommunikationstakt des Kommunikationssystems bei den jeweiligen dezentralen Ein-/Ausgabe-Baugruppen (2, 3) zum selben Zeitpunkt erfolgt.

37. Kommunikationssystem nach einem der Ansprüche 22 bis 36,
**dadurch gekennzeichnet,**
**dass** das Kommunikationssystem zumindest ein Mittel aufweist, das die Registrierung und Erfassung von Signalen am Eingang wenigstens einer dezentralen Ein-/Ausgabe-Baugruppe (2, 3) und wenigstens einer anderen Automatisierungskomponente, insbesondere einem Antrieb (4, 5, 6), so synchronisiert, dass die Registrierung und Erfassung, bezogen auf den Kommunikationstakt des Kommunikationssystems bei der dezentralen Ein-/Ausgabe-Baugruppe (2, 3) und der Automatisierungskomponente zum selben Zeitpunkt erfolgt.

38. Kommunikationssystem nach einem der Ansprüche 22 bis 37,
**dadurch gekennzeichnet,**
**dass** das Kommunikationssystem zumindest ein Mittel aufweist, das die Ausgabe von Signalen am Ausgang wenigstens einer dezentralen Ein-/Ausgabe-Baugruppe (2, 3) und wenigstens einer anderen Automatisierungskomponente, insbesondere einem Antrieb (4, 5, 6), so synchronisiert, dass die Signalausgabe, bezogen auf den Kommunikationstakt des Kommunikationssystems bei der dezentralen Ein-/Ausgabe-Baugruppe (2, 3) und der Automatisierungskomponente zum selben Zeitpunkt erfolgt.

39. Kommunikationssystem nach einem der Ansprüche 22 bis 38,
**dadurch gekennzeichnet,**
**dass** das Kommunikationssystem zumindest eine dezentrale Ein-/Ausgabe-Baugruppe (2, 3) aufweist, die innerhalb eines Kommunikationszyklus des Kommunikationssystems für jedes zugehörige, zu steuernde Gerät von diesen wenigstens einmal Signale erfasst, in ein für das Datennetz (1) kompatibles Datenformat umwandelt und synchron, bezogen auf den Kommunikationstakt des Kommunikationssystems über das Datennetz (1) zur Verarbeitung an die Kontrolleinheit (8) weiterleitet.

40. Kommunikationssystem nach einem der Ansprüche 22 bis 39,
**dadurch gekennzeichnet,**
**dass** das Kommunikationssystem zumindest ein Mittel aufweist, das dafür sorgt, dass die jeweilige Erfassung von Signalen bei einem zu steuernden Gerät zu einem solchen Zeitpunkt innerhalb eines Kommunikationszyklus des Kommunikationssystems erfolgt, so dass von der dezentralen Ein-/Ausgabe-Baugruppe (2, 3) eine Umwandlung der Signale in ein für das Datennetz (1) kompatibles Datenformat und eine Weiterleitung der Daten über das Datennetz (1) zur Verarbeitung an die Kontrolleinheit (8) im unmittelbar anschließenden Kommunikationszyklus und eine Umwandlung der Antwortdaten der Kontrolleinheit (8) in der dezentralen Ein-/Ausgabe-Baugruppe (2, 3) in für das zu steuernde Gerät interpretierbare Signale und deren Ausgabe an das zu steuernde Gerät im übernächsten Kommunikationszyklus erfolgt, so dass der Abstand zwischen Signalerfassung am zu steuernden Gerät und Ausgabe der Antwortsignale an das zu steuernde Gerät höchstens zwei Kommunikationszyklen des Kommunikationssystems beträgt.

41. Kommunikationssystem nach einem der Ansprüche 22 bis 40,
**dadurch gekennzeichnet,**
**dass** das Kommunikationssystem zumindest eine dezentrale Ein-/Ausgabe-Baugruppe (2, 3) aufweist, die Kenndaten zur Verfügung stellt, die von wenigstens einer Kontrolleinheit (8) über das Datennetz (1) abgerufen und ausgewertet werden können, wobei die Kenndaten die maximal mögliche Genauigkeit und den minimal möglichen Zeitpunkt bei der zeitlichen Erfassung von Signalen von einem zu steuernden Gerät umfassen.

42. Kommunikationssystem nach einem der Ansprüche 22 bis 41 ,
**dadurch gekennzeichnet,**
**dass** das Kommunikationssystem zumindest eine dezentrale Ein-/Ausgabe-Baugruppe (2, 3) aufweist, die Kenndaten zur Verfügung stellt, die von wenigstens einer Kontrolleinheit (8) über das Datennetz (1) abgerufen und ausgewertet werden können, wobei die Kenndaten die maximal mögliche Genauigkeit und den minimal möglichen Zeitpunkt bei der zeitlichen Ausgabe von Signalen an ein zu steuerndes Gerät umfassen.

## Claims

1. Method for linking one or more decentralized input/output modules (2, 3) into a synchronous clocked communication system with characteristics of equidistance in the field of industrial systems between at least two stations, especially a control unit (8) and a device to be controlled, and at least one data network (1), in which at least one decentralized input/output module (2, 3) synchronizes to the communication clock of the communication system, and in which at least one of the stations in the communication system has a counter (9), **characterized**
**in that** the station having the counter (9) uses the counter (9) for continuously counting in parallel the number of communication cycles from startup of the system, starting from zero or any desired offset, in the course of operation, and
**in that** a time stamp is generated from a communication cycle, derived from the counter reading, with the time stamp comprising two parts, one part determining the communication cycle of the communication system in which signals of a device to be controlled are registered and detected at the input of a decentralized input/output module (2, 3) or signals are to be switched at the output of a decentralized input/output module (2, 3) and to be output to the device to be controlled, and the other part determining the time relative to the start or to the end of the respective relevant communication cycle of the communication system.

2. Method according to Claim 1, **characterized in that** the counter (9) is in each case incremented at the beginning of a new communication cycle.

3. Method according to Claim 1 or 2, **characterized in that** the respective current state of the counter (9) characterizes the respective current communication cycle.

4. Method according to one of the preceding claims, **characterized in that** an arbitrary communication cycle is derived and/or calculated from a number, especially a count.

5. Method according to one of the preceding claims, **characterized in that** the respective current count and/or current communication cycle and/or current time stamp is distributed by the station with the counter (9) to at least one further station of the communication system by means of the data network (1).

6. Method according to one of the preceding claims, **characterized in that** the respective current count is distributed by the station with the counter (9) to at least one further station of the communication system by means of the data network (1) and the current communication cycle and/or current time stamp is determined from the transmitted current count by the respective stations themselves.

7. Method according to one of the preceding claims, **characterized in that** signals of a device to be controlled, when they are registered and detected at the input of a decentralized input/output module (2, 3) are provided by the input/output module (2, 3) with the time stamp current at this time and the detection switching event, converted into a data format compatible with the data network (1), forwarded with the time stamp and the switching event via the data network (1) to the control unit (8) where they are evaluated and processed.

8. Method according to one of the preceding claims, **characterized in that** data which are intended for the device to be controlled, before they are transmitted to the decentralized input/output module (2, 3), are provided with a time stamp referred to the time of the planned signal output and with an output switching event by the control unit (8) and are transmitted with this time stamp and the switching event via the data network (1) to the decentralized input/output module (2, 3).

9. Method according to one of the preceding claims, **characterized in that** data which are provided with a time stamp which relates to the planned signal output and with an output switching event and are intended for the device to be controlled are converted into signals which can be interpreted for the device to be controlled by the decentralized input/output module (2, 3) and are switched at the time which is predetermined by the transmitted time stamp at the output of the decentralized input/output module (2, 3) in accordance with the switching event and output to the device to be controlled.

10. Method according to one of the preceding claims, **characterized in that** signals of the device to be controlled which are present at the input of the decentralized input/output module (2, 3) to the device are detected synchronously with respect to the communication clock of the communication system by the decentralized input/output module (2, 3), converted into a data format compatible with the data network (1) and forwarded synchronously to the control unit (8) via the data network (1) for processing.

11. Method according to one of the preceding claims, **characterized in that** data which are transmitted synchronously to the decentralized input/output module (2, 3) from the control unit (8) via the data network (1) are converted in the input/output module (2, 3) into signals which can be interpreted for the device to be controlled and switched at the output of the decentralized input/output module (2, 3) synchronously with respect to the communication clock of the communication system and are forwarded to the device.

12. Method according to one of the preceding claims, **characterized in that** the time for the registration and detection of signals of a device to be controlled can be adjusted at the input of the decentralized input/output module (2, 3) with respect to the communication clock of the communication system or a clock derived therefrom.

13. Method according to one of the preceding claims, **characterized in that** the time for the switching and forwarding of signals at the output of the decentralized input/output module (2, 3) to the device to be controlled can be adjusted with respect to the communication clock of the communication system or a clock derived therefrom.

14. Method according to one of the preceding claims, **characterized in that** the registration and detection of signals at the input of the decentralized input/output modules (2, 3) of at least two devices to be controlled which are in each case connected to a different decentralized input/output module (2, 3) is synchronized in such a manner that the registration and detection takes place at the same time with respect to the communication clock of the communication system at the respective decentralized input/output modules (2, 3).

15. Method according to one of the preceding claims, **characterized in that** the output of signals at the output of the decentralized input/output modules (2, 3) to at least two devices to be controlled which are in each case connected to a different decentralized input/output module (2, 3) is synchronized in such a manner that the output takes place at the same time with respect to the communication clock of the communication system at the respective decentralized input/output modules (2, 3).

16. Method according to one of the preceding claims, **characterized in that** the registration and detection of signals at the input of at least one decentralized input/output module (2, 3) and of at least one other automation component, especially a drive (4, 5, 6), is synchronized in such a manner that the registration and detection take place at the same time with respect to the communication clock of the communication system at the decentralized input/output module (2, 3) and the automation component.

17. Method according to one of the preceding claims, **characterized in that** the output of signals at the output of at least one decentralized input/output module (2, 3) and of at least one other automation component, especially a drive (4, 5, 6) is synchronized in such a manner that the signal output takes place at the same time with respect to the communication clock of the communication system at the decentralized input/output module (2, 3) and the automation component.

18. Method according to one of the preceding claims, **characterized in that** for each device to be controlled, signals are detected at least once by the associated decentralized input/output modules (2, 3), converted into a data format compatible with the data network (1) and forwarded synchronously with respect to the communication clock of the communication system via the data network (1) to the control unit (8) for processing within one communication cycle of the communication system.

19. Method according to one of the preceding claims, **characterized in that** the respective detection of signals at a device to be controlled takes place at such a time within a communication cycle of the communication system that a conversion of the signals into a data format compatible with the data network (1) and a forwarding of the data to the control unit (8) via the data network (1) for processing is affected by the decentralized input/output module (2, 3) in the immediately following communication cycle and a conversion of the response data of the control unit (8) in the decentralized input/output module (2, 3) into signals which can be interpreted for the device to be controlled, and their output to the device to be controlled, is affected in the next-but-one communication cycle so that the interval between signal detection at the device to be controlled and output of the response signal to the device to be controlled is, at the most, two communication cycles of the communication system.

20. Method according to one of the preceding claims, **characterized in that** the decentralized input/output module (2, 3) provides characteristic data which can be called up and evaluated via the data network (1) by at least one control unit (8), the characteristic data comprising the maximum possible accuracy and the minimum possible time in the temporal detection of signals from a device to be controlled.

21. Method according to one of the preceding claims, **characterized in that** the decentralized input/output module (2, 3) provides characteristic data which can be called up and evaluated by at least one control unit (8) via the data network (1), the characteristic data comprising the maximum possible accuracy and the minimum possible time in the temporal output of signals to a device to be controlled.

22. Synchronous clocked communication system having characteristics of equidistance in the field of industrial systems between at least two stations, especially a control unit (8) and a device to be controlled, at least one data network (1) and at least one decentralized input/output module (2, 3), in which the input/output module is in synch with the communication clock of the communication system, and in which at least one station has a counter (9), **characterized**
**in that** the station having the counter (9) uses the counter (9) for continuously counting in parallel the number of communication cycles from startup of the system, starting from zero or any desired offset, in the course of operation, and
**in that** the communication system has at least one means which generates a time stamp from a communication cycle, derived from the counter reading, with the time stamp comprising two parts, one part determining the communication cycle of the communication system in which signals of the device to be controlled are registered and detected at the input of a decentralized input/output module (2, 3) or signals are to be switched at the output of an input/output module (2, 3) and to be output to the device to be controlled, and the other part determining the time relative to the start or to the end of the respective relevant communication cycle of the communication system.

23. Communication system according to Claim 22, **characterized in that** the station with the counter (9) increments the counter (9) in each case at the beginning of a new communication cycle.

24. Communication system according to one of Claims 22 or 23, **characterized in that** the communication system exhibits at least one means which ensures that the respective current state of the counter (9) characterizes the respective current communication cycle.

25. Communication system according to one of Claims 22 to 24, **characterized in that** the communication system exhibits at least one means which derives and/or calculates an arbitrary communication cycle from a number, especially a count.

26. Communication system according to one of Claims 22 to 25, **characterized in that** the communication system exhibits at least one means which represents a communication cycle by means of a digitized number.

27. Communication system according to one of Claims 22 to 26, **characterized in that** the station with the counter (9) distributes the respective current count to at least one further station of the communication system by means of the data network (1) and the respective stations themselves determine the current communication cycle and/or the current time stamp from the current count transmitted.

28. Communication system according to one of Claims 22 to 27, **characterized in that** the communication system exhibits at least one decentralized input/output module (2, 3) which provides signals of a device to be controlled, when they are registered and detected at the input of the decentralized input/output module (2, 3) with the time stamp current at this time and the detection switching event, converts them into a data format compatible with the data network (1) and forwards them with the time stamp and the switching event via the data network (1) to the control unit (8) for evaluation and processing.

29. Communication system according to one of Claims 22 to 28, **characterized in that** the communication system exhibits at least one control unit (8) which provides data which are intended for the device to be controlled, before they are transmitted to the decentralized input/output module (2, 3), with a time stamp referred to the time of the planned signal output and with an output switching event and transmits them with this time stamp and the switching event via the data network (1) to the decentralized input/output module (2, 3).

30. Communication system according to one of Claims 22 to 29, **characterized in that** the communication system exhibits at least one decentralized input/output module (2, 3) which converts data which are provided with a time stamp which relates to the planned signal output and with an output switching event and are intended for the device to be controlled, into signals which can be interpreted for the device to be controlled and switches them at the time which is predetermined by the transmitted time stamp, at the output of the decentralized input/output module (2, 3) in accordance with the switching event and outputs them to the device to be controlled.

31. Communication system according to one of Claims 22 to 30, **characterized in that** the communication system exhibits at least one decentralized input/output module (2, 3) which detects the signals of the device to be controlled which are present at the input of the decentralized input/output module (2, 3) synchronously with respect to the communication clock of the communication system, converts them into a data format compatible with the data network (1) and forwards them synchronously to the control unit (8) via the data network (1) for processing.

32. Communication system according to one of Claims 22 to 31, **characterized in that** the communication system exhibits at least one decentralized input/output module (2, 3) which converts data sent synchronously by the control unit (8) via the data network (1) into signals which can be interpreted for a device to be controlled and switches them at the output of the decentralized input/output module (2, 3) synchronously with respect to the communication clock of the communication system and forwards them to the device.

33. Communication system according to one of Claims 22 to 32, **characterized in that** the communication system exhibits at least one means which adjusts the time for the registration and detection of signals of a device to be controlled at the input of an input/output module (2, 3) with respect to the communication clock of the communication system or a clock derived therefrom.

34. Communication system according to one of Claims 22 to 33, **characterized in that** the communication system exhibits at least one means which adjusts the time for the switching and forwarding of signals at the output of the decentralized input/output module (2, 3) to the device to be controlled, with respect to the communication clock of the communication system or a clock derived therefrom.

35. Communication system according to one of Claims 22 to 34, **characterized in that** the communication system exhibits at least one means which synchronizes the registration and detection of signals at the input of the decentralized input/output modules (2, 3) of at least two devices to be controlled which are in each case connected to a different decentralized input/output module (2, 3), in such a manner that the registration and detection takes place at the same time with respect to the communication clock of the communication system at the respective decentralized input/output modules (2, 3).

36. Communication system according to one of Claims 22 to 35, **characterized in that** the communication system exhibits at least one means which synchronizes the output of signals at the output of the decentralized input/output modules (2, 3) to at least two devices to be controlled which are in each case connected to a different decentralized input/output module (2, 3), in such a manner that the output takes place at the same time with respect to the communication clock of the communication system at the respective decentralized input/output modules (2, 3).

37. Communication system according to one of Claims 22 to 36, **characterized in that** the communication system exhibits at least one means which synchronizes the registration and detection of signals at the input of at least one decentralized input/output module (2, 3) and of at least one other automation component, especially a drive (4, 5, 6) in such a manner that the registration and detection takes place at the same time with respect to the communication clock of the communication system at the decentralized input/output module (2, 3) and the automation component.

38. Communication system according to one of Claims 22 to 37, **characterized in that** the communication system exhibits at least one means which synchronizes the output of signals at the output of at least one decentralized input/output module (2, 3) and of at least one other automation component, especially a drive (4, 5, 6), in such a manner that the signal output takes place at the same time with respect to the communication clock of the communication system at the decentralized input/output module (2, 3) and the automation component.

39. Communication system according to one of Claims 22 to 38, **characterized in that** the communication system exhibits at least one decentralized input/output module (2, 3) which, for each associated device to be controlled, detects from these signals at least once within a communication cycle of the communication system, converts these signals into a data format compatible with the data network (1) and forwards them synchronously with respect to the communication clock of the communication system via the data network (1) to the control unit (8) for processing.

40. Communication system according to one of Claims 22 to 39, **characterized in that** the communication system exhibits at least one means which ensures that the respective detection of signals at a device to be controlled takes place at such a time within a communication cycle of the communication system that a conversion of the signals into a data format compatible with the data network (1) and a forwarding of the data to the control unit (8) via the data network (1) for processing is affected by the decentralized input/output module (2, 3) in the immediately following communication cycle and a conversion of the response data of the control unit (8) in the decentralized input/output module (2, 3) into signals which can be interpreted for the device to be controlled, and their output to the device to be controlled, is affected in the next-but-one communication cycle so that the interval between signal detection at the device to be controlled and output of the response signal to the device to be controlled is, at the most, two communication cycles of the communication system.

41. Communication system according to one of Claims 22 to 40, **characterized in that** the communication system exhibits at least one decentralized input/output module (2, 3) which provides characteristic data which can be called up and evaluated via the data network (1) by at least one control unit (8), the characteristic data comprising the maximum possible accuracy and the minimum possible time in the temporal detection of signals from a device to be controlled.

42. Communication system according to one of Claims 22 to 41, **characterized in that** the communication system exhibits at least one decentralized input/output module (2, 3) which provides characteristic data which can be called up and evaluated by at least one control unit (8) via the data network (1), the characteristic data comprising the maximum possible accuracy and the minimum possible time in the output with time of signals to a device to be controlled.

## Revendications

1. Procédé d'intégration d'un ou plusieurs modules d'entrée / sortie décentralisés (2, 3) dans un système de communication synchrone cadencé ayant des propriétés d'équidistance dans le domaine des installations industrielles entre au moins deux utilisateurs, notamment une unité de contrôle (8) et un appareil à commander, et au moins un réseau de données (1), au moins un module d'entrée / sortie décentralisé (2, 3) se synchronisant sur l'horloge de communication du système de communication et au moins l'un des utilisateurs du système de communication comportant un compteur (9),
**caractérisé par le fait que**
l'utilisateur ayant le compteur (9) compte en permanence au cours du fonctionnement au moyen du compteur (9) le nombre des cycles de communication à partir du démarrage du système et en commençant par zéro ou par une valeur décalée quelconque, et
on produit un timbre horodateur à partir d'un cycle de communication qui est déduit de l'état de compteur, le timbre horodateur étant constitué de deux parties, une partie déterminant le cycle de communication du système de communication dans lequel des signaux d'un appareil à commander sont enregistrés et acquis à l'entrée d'un module d'entrée / sortie décentralisé (2, 3) ou des signaux doivent être appliqués à la sortie d'un module d'entrée / sortie décentralisé (2, 3) et être donnés à l'appareil à commander et l'autre partie déterminant l'instant par rapport au début ou à la fin du cycle de communication respectivement déterminant du système de communication.

2. Procédé selon la revendication 1,
**caractérisé par le fait que** l'on incrémente le compteur (9) à chaque début d'un nouveau cycle de communication.

3. Procédé selon la revendication 1 ou 2,
**caractérisé par le fait que** l'état respectivement actuel du compteur (9) caractérise le cycle de communication respectivement actuel.

4. Procédé selon l'une quelconque des revendications précédentes,
**caractérisé par le fait que** l'on déduit et/ou calcule un cycle de communication quelconque à partir d'un nombre, notamment d'un état du compteur.

5. Procédé selon l'une quelconque des revendications précédentes,
**caractérisé par le fait que** l'utilisateur ayant le compteur (9) distribue l'état de compteur respectivement actuel et/ou le cycle de communication respectivement actuel et/ou le timbre horodateur respectivement actuel à au moins un autre utilisateur du système de communication au moyen du réseau de données (1).

6. Procédé selon l'une quelconque des revendications précédentes,
**caractérisé par le fait que** l'utilisateur ayant le compteur (9) distribue l'état de compteur respectivement actuel à au moins un autre utilisateur du système de communication au moyen du réseau de données (1) et que les utilisateurs respectifs déterminent eux-mêmes le cycle de communication actuel et/ou le timbre horodateur actuel à partir de l'état de compteur actuel transmis.

7. Procédé selon l'une quelconque des revendications précédentes,
**caractérisé par le fait que**, lors de leur enregistrement et acquisition à l'entrée d'un module d'entrée / sortie décentralisé (2, 3), des signaux d'un appareil à commander sont munis par le module d'entrée / sortie (2, 3) du timbre horodateur actuel à cet instant et de l'événement de commutation d'acquisition, ils sont transformés dans un format de données compatible avec le réseau de données (1) et ils sont retransmis avec le timbre horodateur et avec l'événement de commutation par l'intermédiaire du réseau de données (1) à l'unité de contrôle (8) où ils sont évalués et traités.

8. Procédé selon l'une quelconque des revendications précédentes,
**caractérisé par le fait que**, avant leur transmission au module d'entrée / sortie décentralisé (2, 3), des données qui sont destinées à l'appareil à commander sont munies par l'unité de contrôle (8) d'un timbre horodateur, qui se rapporte à l'instant de la sortie de signal planifiée, et d'un événement de commutation de sortie et elles sont transmises avec ce timbre horodateur et avec l'événement de commutation au module d'entrée / sortie décentralisé (2, 3) par l'intermédiaire du réseau de données (1).

9. Procédé selon l'une quelconque des revendications précédentes,
**caractérisé par le fait que** des données qui sont munies d'un timbre horodateur qui se rapporte à la sortie de signal planifiée et d'un événement de commutation de sortie et qui sont destinées à l'appareil à commander sont transformées par le module d'entrée / sortie décentralisé (2, 3) en des signaux interprétables par l'appareil à commander et, à l'instant qui est prescrit par le timbre horodateur transmis, elles sont appliquées à la sortie du module d'entrée / sortie décentralisé (2, 3) selon l'événement de commutation et envoyées à l'appareil à commander.

10. Procédé selon l'une quelconque des revendications précédentes,
**caractérisé par le fait que** des signaux de l'appareil à commander qui se trouvent à l'entrée du module d'entrée / sortie décentralisé (2, 3) vers l'appareil sont acquis par le module d'entrée / sortie décentralisé (2, 3) de manière synchrone par rapport à l'horloge de communication du système de communication, sont transformés dans un format de données compatible avec le réseau de données (1) et sont retransmis de manière synchrone par l'intermédiaire du réseau de données (1) à l'unité de contrôle (8) en vue de leur traitement.

11. Procédé selon l'une quelconque des revendications précédentes,
**caractérisé par le fait que** des données qui sont transmises par l'unité de contrôle (8) de manière synchrone par l'intermédiaire du réseau de données (1) au module d'entrée / sortie décentralisé (2, 3) sont transformées dans le module d'entrée / sortie (2, 3) en signaux interprétables par l'appareil de commande et elles sont appliquées de manière synchrone, par rapport à l'horloge de communication du système de communication, à la sortie du module d'entrée / sortie décentralisé (2, 3) et retransmises à l'appareil.

12. Procédé selon l'une quelconque des revendications précédentes,
**caractérisé par le fait que** l'instant de l'enregistrement et de l'acquisition de signaux d'un appareil à commander à l'entrée du module d'entrée / sortie décentralisé (2, 3) par rapport à l'horloge de communication du système de communication ou à une horloge déduite de celle-ci est réglable.

13. Procédé selon l'une quelconque des revendications précédentes,
**caractérisé par le fait que** l'instant de l'application et de la retransmission de signaux à la sortie du module d'entrée / sortie décentralisé (2, 3) vers l'appareil à commander par rapport à l'horloge de communication du système de communication ou à une horloge déduite de celle-ci est réglable.

14. Procédé selon l'une quelconque des revendications précédentes,
**caractérisé par le fait que** l'enregistrement et l'acquisition de signaux à l'entrée des modules d'entrée / sortie décentralisés (2, 3) en provenance d'au moins deux appareils à commander qui sont reliés chacun à un module d'entrée / sortie décentralisé (2, 3) différent sont synchronisés de telle sorte que l'enregistrement et l'acquisition s'effectuent au niveau des modules d'entrée / sortie décentralisés (2, 3) respectifs au même instant défini par rapport à l'horloge de communication du système de communication.

15. Procédé selon l'une quelconque des revendications précédentes,
**caractérisé par le fait que** la sortie de signaux à la sortie des modules d'entrée / sortie décentralisés (2, 3) vers au moins deux appareils à commander qui sont reliés chacun à un module d'entrée / sortie décentralisé (2, 3) différent est synchronisée de telle sorte que la sortie s'effectue au niveau des modules d'entrée / sortie décentralisés (2, 3) respectifs au même instant défini par rapport à l'horloge de communication du système de communication.

16. Procédé selon l'une quelconque des revendications précédentes,
**caractérisé par le fait que** l'enregistrement et l'acquisition de signaux à l'entrée d'au moins un module d'entrée / sortie décentralisé (2, 3) et d'au moins un autre composant d'automatisation, notamment un dispositif moteur (4, 5, 6), sont synchronisés de telle sorte que l'enregistrement et l'acquisition s'effectuent au niveau du module d'entrée / sortie décentralisé (2, 3) et du composant d'automatisation au même instant défini par rapport à l'horloge de communication du système de communication.

17. Procédé selon l'une quelconque des revendications précédentes,
**caractérisé par le fait que** la sortie de signaux à la sortie d'au moins un module d'entrée / sortie décentralisé (2, 3) et d'au moins un autre composant d'automatisation, notamment un dispositif moteur (4, 5, 6), est synchronisée de telle sorte que la sortie de signaux s'effectue au niveau du module d'entrée / sortie décentralisé (2, 3) et du composant d'automatisation au même instant défini par rapport à l'horloge de communication du système de communication.

18. Procédé selon l'une quelconque des revendications précédentes,
**caractérisé par le fait que**, pour chaque appareil à commander, des signaux sont acquis par les modules d'entrée / sortie décentralisés (2, 3) associés au moins une fois à l'intérieur d'un cycle de communication du système de communication, sont transformés dans un format de données compatible avec le réseau de données (1) et sont retransmis de manière synchrone, par rapport à l'horloge de communication du système de communication, par l'intermédiaire du réseau de données (1) à l'unité de contrôle (8) en vue de leur traitement.

19. Procédé selon l'une quelconque des revendications précédentes,
**caractérisé par le fait que** l'acquisition respective de signaux sur un appareil à commander s'effectue à un instant tel à l'intérieur d'un cycle de communication du système de communication que le module d'entrée / sortie décentralisé (2, 3) effectue dans le premier cycle de communication suivant une transformation des signaux dans un format de données compatible avec le réseau de données (1) ainsi qu'une retransmission des données par l'intermédiaire du réseau de données (1) à l'unité de contrôle (8) en vue de leur traitement et qu'une transformation des données de réponse de l'unité de contrôle (8) dans le module d'entrée / sortie décentralisé (2, 3) en signaux interprétables par l'appareil à commander ainsi que la sortie de ceux-ci vers l'appareil à commander s'effectuent dans le deuxième cycle de communication suivant de telle sorte que l'écart entre acquisition de signaux sur l'appareil à commander et sortie des signaux de réponse vers l'appareil à commander vaut au maximum deux cycles de communication du système de communication.

20. Procédé selon l'une quelconque des revendications précédentes,
**caractérisé par le fait que** le module d'entrée / sortie décentralisé (2, 3) met à disposition des données caractéristiques qui peuvent être demandées par au moins une unité de contrôle (8) par l'intermédiaire du réseau de données (1) puis être évaluées, les données caractéristiques comprenant la précision maximale possible et l'instant minimal possible pour l'acquisition temporelle de signaux d'un appareil à commander.

21. Procédé selon l'une quelconque des revendications précédentes,
**caractérisé par le fait que** le module d'entrée / sortie décentralisé (2, 3) met à disposition des données caractéristiques qui peuvent être demandées par au moins une unité de contrôle (8) par l'intermédiaire du réseau de données (1) puis être évaluées, les données caractéristiques comprenant la précision maximale possible et l'instant minimal possible pour la sortie temporelle de signaux vers un appareil à commander.

22. Système de communication synchrone cadencé ayant des propriétés d'équidistance dans le domaine des installations industrielles entre au moins deux utilisateurs, notamment une unité de contrôle (8) et un appareil à commander, au moins un réseau de données (1) et au moins un module d'entrée / sortie décentralisé (2, 3), le module d'entrée / sortie se synchronisant sur l'horloge de communication du système de communication et au moins un utilisateur comportant un compteur (9),
**caractérisé par le fait que**
l'utilisateur ayant le compteur (9) compte en permanence au cours du fonctionnement au moyen du compteur (9) le nombre des cycles de communication à partir du démarrage du système et en commençant par zéro ou par une valeur décalée quelconque, et
le système de communication comporte au moins un moyen qui produit un timbre horodateur à partir d'un cycle de communication qui est déduit de l'état de compteur, le timbre horodateur étant constitué de deux parties, une partie déterminant le cycle de communication du système de communication dans lequel des signaux d'un appareil à commander sont enregistrés et acquis à l'entrée d'un module d'entrée / sortie décentralisé (2, 3) ou des signaux doivent être appliqués à la sortie d'un module d'entrée / sortie décentralisé (2, 3) et être donnés à l'appareil à commander et l'autre partie déterminant l'instant par rapport au début ou à la fin du cycle de communication respectivement déterminant du système de communication.

23. Système de communication selon la revendication 22,
**caractérisé par le fait que** l'utilisateur ayant le compteur (9) incrémente le compteur (9) à chaque début d'un nouveau cycle de communication.

24. Système de communication selon l'une quelconque des revendications 22 ou 23,
**caractérisé par le fait que** le système de communication comporte au moins un moyen qui fait en sorte que l'état respectivement actuel du compteur (9) caractérise le cycle de communication respectivement actuel.

25. Système de communication selon l'une quelconque des revendications 22 à 24,
**caractérisé par le fait que** le système de communication comporte au moins un moyen qui déduit et/ou calcule un cycle de communication quelconque à partir d'un nombre, notamment d'un état du compteur.

26. Système de communication selon l'une quelconque des revendications 22 à 25,
**caractérisé par le fait que** le système de communication comporte au moins un moyen qui représente un cycle de communication par un nombre numérisé.

27. Système de communication selon l'une quelconque des revendications 22 à 26,
**caractérisé par le fait que** l'utilisateur ayant le compteur (9) distribue l'état de compteur respectivement actuel à au moins un autre utilisateur du système de communication au moyen du réseau de données (1) et que les utilisateurs respectifs déterminent eux-mêmes le cycle de communication actuel et/ou le timbre horodateur actuel à partir de l'état de compteur actuel transmis.

28. Système de communication selon l'une quelconque des revendications 22 à 27,
**caractérisé par le fait que** le système de communication comporte au moins un module d'entrée / sortie décentralisé (2, 3) qui, lors de leur enregistrement et acquisition à l'entrée d'un module d'entrée / sortie décentralisé (2, 3), munit des signaux d'un appareil à commander du timbre horodateur actuel à cet instant et de l'événement de commutation d'acquisition, transforme ces signaux dans un format de données compatible avec le réseau de données (1) et retransmet ces signaux avec le timbre horodateur et avec l'événement de commutation par l'intermédiaire du réseau de données (1) à l'unité de contrôle (8) pour leur évaluation et traitement.

29. Système de communication selon l'une quelconque des revendications 22 à 28,
**caractérisé par le fait que** le système de communication comporte au moins une unité de contrôle (8) qui, avant leur transmission au module d'entrée / sortie décentralisé (2, 3), munit des données qui sont destinées à l'appareil à commander d'un timbre horodateur, qui se rapporte à l'instant de la sortie de signal planifiée, et d'un événement de commutation de sortie et qui transmet ces données avec ce timbre horodateur et avec l'événement de commutation au module d'entrée / sortie décentralisé (2, 3) par l'intermédiaire du réseau de données (1).

30. Système de communication selon l'une quelconque des revendications 22 à 29,
**caractérisé par le fait que** le système de communication comporte au moins un module d'entrée / sortie décentralisé (2, 3) qui transforme des données qui sont munies d'un timbre horodateur qui se rapporte à la sortie de signal planifiée et d'un événement de commutation de sortie et qui sont destinées à l'appareil à commander en des signaux interprétables par l'appareil à commander et qui applique ces signaux, à l'instant prescrit par le timbre horodateur transmis, à la sortie du module d'entrée / sortie décentralisé (2, 3) selon l'événement de commutation et les envoie à l'appareil à commander.

31. Système de communication selon l'une quelconque des revendications 22 à 30,
**caractérisé par le fait que** le système de communication comporte au moins un module d'entrée / sortie décentralisé (2, 3) qui acquiert les signaux de l'appareil à commander qui se trouvent à l'entrée du module d'entrée / sortie décentralisé (2, 3) de manière synchrone par rapport à l'horloge de communication du système de communication, qui transforme ces signaux dans un format de données compatible avec le réseau de données (1) et qui retransmet ces signaux de manière synchrone par l'intermédiaire du réseau de données (1) à l'unité de contrôle (8) en vue de leur traitement.

32. Système de communication selon l'une quelconque des revendications 22 à 31,
**caractérisé par le fait que** le système de communication comporte au moins un module d'entrée / sortie décentralisé (2, 3) qui transforme des données émises par l'unité de contrôle (8) de manière synchrone par l'intermédiaire du réseau de données (1) en signaux interprétables par l'appareil de commande et qui applique ces signaux de manière synchrone, par rapport à l'horloge de communication du système de communication, à la sortie du module d'entrée / sortie décentralisé (2, 3) et les retransmet à l'appareil.

33. Système de communication selon l'une quelconque des revendications 22 à 32,
**caractérisé par le fait que** le système de communication comporte au moins un moyen qui règle l'instant de l'enregistrement et de l'acquisition de signaux d'un appareil à commander à l'entrée d'un module d'entrée / sortie décentralisé (2, 3) par rapport à l'horloge de communication du système de communication ou à une horloge déduite de celle-ci.

34. Système de communication selon l'une quelconque des revendications 22 à 33,
**caractérisé par le fait que** le système de communication comporte au moins un moyen qui règle l'instant de l'application et de la retransmission de signaux à la sortie du module d'entrée / sortie décentralisé (2, 3) vers l'appareil à commander par rapport à l'horloge de communication du système de communication ou à une horloge déduite de celle-ci.

35. Système de communication selon l'une quelconque des revendications 22 à 34,
**caractérisé par le fait que** le système de communication comporte au moins un moyen qui synchronise l'enregistrement et l'acquisition de signaux à l'entrée des modules d'entrée / sortie décentralisés (2, 3) en provenance d'au moins deux appareils à commander qui sont reliés chacun à un module d'entrée / sortie décentralisé (2, 3) différent de telle sorte que l'enregistrement et l'acquisition s'effectuent au niveau des modules d'entrée / sortie décentralisés (2, 3) respectifs au même instant défini par rapport à l'horloge de communication du système de communication.

36. Système de communication selon l'une quelconque des revendications 22 à 35,
**caractérisé par le fait que** le système de communication comporte au moins un moyen qui synchronise la sortie de signaux à la sortie des modules d'entrée / sortie décentralisés (2, 3) vers au moins deux appareils à commander qui sont reliés chacun à un module d'entrée / sortie décentralisé (2, 3) différent de telle sorte que la sortie s'effectue au niveau des modules d'entrée / sortie décentralisés (2, 3) respectifs au même instant défini par rapport à l'horloge de communication du système de communication.

37. Système de communication selon l'une quelconque des revendications 22 à 36,
**caractérisé par le fait que** le système de communication comporte au moins un moyen qui synchronise l'enregistrement et l'acquisition de signaux à l'entrée d'au moins un module d'entrée / sortie décentralisé (2, 3) et d'au moins un autre composant d'automatisation, notamment un dispositif moteur (4, 5, 6), de telle sorte que l'enregistrement et l'acquisition s'effectuent au niveau du module d'entrée / sortie décentralisé (2, 3) et du composant d'automatisation au même instant défini par rapport à l'horloge de communication du système de communication.

38. Système de communication selon l'une quelconque des revendications 22 à 37,
**caractérisé par le fait que** le système de communication comporte au moins un moyen qui synchronise la sortie de signaux à la sortie d'au moins un module d'entrée / sortie décentralisé (2, 3) et d'au moins un autre composant d'automatisation, notamment un dispositif moteur (4, 5, 6), de telle sorte que la sortie de signaux s'effectue au niveau du module d'entrée / sortie décentralisé (2, 3) et du composant d'automatisation au même instant défini par rapport à l'horloge de communication du système de communication.

39. Système de communication selon l'une quelconque des revendications 22 à 38,
**caractérisé par le fait que** le système de communication comporte au moins un module d'entrée / sortie décentralisé (2, 3) qui, pour chaque appareil à commander associé, acquiert des signaux de celui-ci au moins une fois à l'intérieur d'un cycle de communication du système de communication, les transforme dans un format de données compatible avec le réseau de données (1) et les retransmet de manière synchrone, par rapport à l'horloge de communication du système de communication, par l'intermédiaire du réseau de données (1) à l'unité de contrôle (8) en vue de leur traitement.

40. Système de communication selon l'une quelconque des revendications 22 à 39,
**caractérisé par le fait que** le système de communication comporte au moins un moyen qui fait en sorte que l'acquisition respective de signaux sur un appareil à commander s'effectue à un instant tel à l'intérieur d'un cycle de communication du système de communication que le module d'entrée / sortie décentralisé (2, 3) effectue dans le premier cycle de communication suivant une transformation des signaux dans un format de données compatible avec le réseau de données (1) ainsi qu'une retransmission des données par l'intermédiaire du réseau de données (1) à l'unité de contrôle (8) en vue de leur traitement et qu'une transformation des données de réponse de l'unité de contrôle (8) dans le module d'entrée / sortie décentralisé (2, 3) en signaux interprétables par l'appareil à commander ainsi que la sortie de ceux-ci vers l'appareil à commander s'effectuent dans le deuxième cycle de communication suivant de telle sorte que l'écart entre acquisition de signaux sur l'appareil à commander et sortie des signaux de réponse vers l'appareil à commander vaut au maximum deux cycles de communication du système de communication.

41. Système de communication selon l'une quelconque des revendications 22 à 40,
**caractérisé par le fait que** le système de communication comporte au moins un module d'entrée / sortie décentralisé (2, 3) qui met à disposition des données caractéristiques qui peuvent être demandées par au moins une unité de contrôle (8) par l'intermédiaire du réseau de données (1) puis être évaluées, les données caractéristiques comprenant la précision maximale possible et l'instant minimal possible pour l'acquisition temporelle de signaux d'un appareil à commander.

42. Système de communication selon l'une quelconque des revendications 22 à 41,
**caractérisé par le fait que** le système de communication comporte au moins un module d'entrée / sortie décentralisé (2, 3) qui met à disposition des données caractéristiques qui peuvent être demandées par au moins une unité de contrôle (8) par l'intermédiaire du réseau de données (1) puis être évaluées, les données caractéristiques comprenant la précision maximale possible et l'instant minimal possible pour la sortie temporelle de signaux vers un appareil à commander.
